# EUROPÄISCHE PATENTSCHRIFT

(11) **EP 0 884 981 B1**
(45) Veröffentlichungstag und Bekanntmachung des Hinweises auf die Patenterteilung: **28.11.2001**
(21) Anmeldenummer: 97906170.2
(22) Anmeldetag: 05.03.1997
(51) Int. Cl.: A61C 9/00

(54) **VORRICHTUNG ZUM HERSTELLEN VON ZAHNABDRÜCKEN UND ABFORMLÖFFEL HIERFÜR**
DEVICE FOR PRODUCING TOOTH IMPRESSIONS AND IMPRESSION TRAY THEREFOR
DISPOSITIF POUR REALISER DES EMPREINTES DENTAIRES ET PORTE-EMPREINTE A CET EFFET

(30) Priorität: 06.03.1996 DE 19608546; 09.07.1996 DE 19627517
(43) Veröffentlichungstag der Anmeldung: 23.12.1998
(60) Teilanmeldung: 00103859.5
(73) Patentinhaber: Hahn, Rainer, Dr., 72074 Tübingen (DE)
(72) Erfinder: Hahn, Rainer, Dr., 72074 Tübingen (DE)
(74) Vertreter: Ostertag, Reinhard
(86) Internationale Anmeldenummer: EP9701110
(87) Internationale Veröffentlichungsnummer: WO9732536

(56) Entgegenhaltungen:
- EP-A- 0 519 195
- DE-A- 4 130 701
- DE-U- 9 313 561
- US-A- 1 437 844

## Beschreibung

Die Erfindung betrifft einen Abformlöffel zum Herstellen von Zahnabdrücken gemäß dem Oberbegriff des Anspruches 1, sowie eine Vorrichtung zum Herstellen von Zahnabdrücken mit einem solchen Abformlöffel.

Ein Abformlöffel gemäß dem Oberbegriff des Anspruches 1 ist in der DE 93 13 561 U1 beschrieben. Er soll eine Abformung des Zahns bzw. Zahnstumpfs im Bereich des Sulcus ermöglichen, ohne daß dort vorliegende Hohlräume nicht von der Abdruckmasse erfaßt werden. Dies wird durch eine spezielle Anordnung von Injektionskanälen für die Abformmasse innerhalb des Abdrucklöffels erreicht. Dadurch wird die Abdruckmasse vertikal von oben gegen die Zahnreihen geführt und ein Druck der Abformmasse auf das die Zähne umgebende Zahnfleisch ausgeübt, so daß der Sulcus freigelegt wird. Die Austrittsgeschwindigkeit der Abdruckmasse aus dem Injektionskanal kann durch ein an das Löffelinnere angelegtes Vakuum erhöht werden. So erhält man gegenüber noch älterem dm Stand der Technik eine verbesserte Abformung im Bereich des Sulcus.

Ein ähnlicher Abformlöffel ist in der DE 41 30 701 A1 offenbart.

In der Praxis erhält man mit einem solchen bekannten Abformlöffel keine vollständig zufriedenstellenden Zahnabdrücke.

Durch die vorliegende Erfindung soll ein Abformlöffel zum Herstellen von Zahnabdrücken gemäß dem Oberbegriff des Anspruches 1 so weitergebildet werden, daß man sehr gut paßgenaue Abdrücke erhält und der Abformlöffel einfach herstellbar ist.

Diese Aufgabe ist erfindungsgemäß gelöst durch einen Abformlöffel, welche die im Anspruch 1 angegebenen Merkmale aufweist.

Beim Anwenden eines erfindungsgemäßen Abformlöffels zum Herstellen von Zahnabdrücken werden folgende Funktionen und Vorteile erhalten:
1. Der Löffel wird sowohl bei der Anwendung an einem Oberkiefer als auch bei der Anwendung an einem Unterkiefer sauber positioniert und gut fixiert, und zwar unabhängig von Bewegungen von Schleimhäuten oder der Zunge. Der Löffel braucht nicht durch den Zahnarzt oder durch Hilfspersonal gehalten zu werden. Auf diese Weise ist nicht nur das Handling wesentlich vereinfacht, das Herstellen eines Abdruckes erfolgt auch für den Patienten angenehmer.
2. Der Löffel ist am Rand dicht abgeschlossen, so daß kein flüssiges Abformmaterial aus dem Löffel herausläuft und z.B. in den Rachen gelangt.
3. Durch die erfindungsmäß vorgesehene Unterdruckbeaufschlagung des Abformraumes, der zum einen durch den Löffel zum anderen durch die Zähne des Patienten und das die Zähne umgebende Zahnfleisch begrenzt wird, wird auch erreicht, daß sich die Zahnfleischränder geringfügig von den Zahnhälsen abheben, so daß das zunächst flüssige Abformmaterial auch den nahe am Zahnfleischsaum liegenden Bereich der Zähne gut abformt.
4. Im Einsatz der erfindungsgemäßen Abformlöffel hat man den schon oben angesprochenen abgeschlossenen Abformraum. Dieser kann vor dem Ausfüllen mit einem Abformmaterial oder auch in Anwendungssituationen, welche nicht in Zusammenhang mit Abformungen stehen, auch zur selektiven Anwendung von Therapeutika verwendet werden, insbesondere in Form von Flüssigkeiten, Aerosolen oder Gasen. Es kann sich hierbei beispielsweise um blutstillende Mittel, Netzmittel, Adstringenzien, Desinfektionsmittel, Fluoridlösungen, desensibilisierende Substanzen, Desodorantien, Geschmacksstoffe, Substanzen zur Parodontalbehandlung, Substanzen zur Kariesprophylaxe, die Plaquebildung beinflussende Substanzen, Netzmittel wie Natriumlaurylsulfat, Anitadhäsiva in Form von flüssigen Lösungen oder Aerosolen, z.B. Delmopinol- oder Triclosan-Lösungen, Mittel zur Manipulation der Speicheldrüsensekretion oder physikalische Therapeutika wie Wasser, Warmluft und dergleichen handeln.
5. Bei der Verwendung des erfindungsgemäßen Abformlöffels hat man einen gerichteten Fluß von Flüssigkeiten, z.B. der oben erwähnten Therapeutika oder der Abformmasse vom Abformmaterial-Anschlußelement über einen vorgegebenen Strömungsweg zum Vakuum-Anschlußelement. Diese zugeführten Flüssigkeiten schieben auf dem beschriebenen Strömungsweg angefundene Flüssigkeiten wie Speichel und Blut vor sich her. Auf diese Weise wird ein vollständiges Ausfüllen des Abformraumes gewährleistet. Dabei erfolgt die Relativbewegung zwischen den Flüssigkeiten und den Zahnlängsachsen unter einem von Null verschiedenen Winkel, vorzugsweise einem bei 90° liegenden Winkel. Dabei kann man bevorzugte Fließrichtungen von distal nach mesial oder umgekehrt oder von bukkal nach oral oder umgekehrt einrichten. Bei den herkömmlichen Abformtechniken wird der mit dem Abformmaterial gefüllte Löffel in zur Kieferebene senkrechter Richtung auf den Kiefer aufgesetzt, was bedeutet, daß die Relativbewegung zwischen Abformmaterial und den Zähnen parallel zur Zahnlängsachse erfolgt.
6. Beim Einsatz des erfindungsgemäßen Abformlöffels kann man auch das Herstellen des Zahnabdruckes mit einem therapeutischen Effekt kombinieren, etwa dadurch, daß man dem Abformmaterial selbst ein Therapeutikum zusetzt.
   Auch kann man verschiedene Schritte der Abdruckherstellung zusammenfassen, etwa dadurch, daß man anstelle des Aufbringens eines Netzmittels auf die abzuformenden Oberflächen in einem vorbereitenden Schritt oder bei der Materialherstellung dieses Netzmittel dem Abformmaterial selbst beigibt, so daß der Vorbereitungsschritt eingespart werden kann.

Die flüssigen härtbaren Abformmaterialien, die in dem erfindungsgemäßen Abformlöffel verwendet werden, haben verglichen mit Wasser verhältnismäßig hohe Viskosität, wie sie für die sogenannten "dünnfließenden" Abform- oder Korrekturmassen, die zur intraoralen Abformung verwendet werden, (Gegensatz: knetartige Abformmassen) typisch ist. Aus diesem Grunde werden sie unter positivem Druck dem Abformmaterial-Anschlußelement zugeführt, und der im Abformraum aufgebaute Unterdruck wird so gewählt, daß einerseits die gewünschte gute Randabdichtung des Löffels und der gewünschte gute Sitz des Löffels gewährleistet ist, andererseits aber in den mit den Löffelrändern zusammenarbeitenden Geweben keine Hämatome entstehen und stärkere Schmerzen des Patienten vermieden werden.

Der angelegte Unterdruck und der Einspeisedruck für das Abformmaterial sowie die Füllmenge pro Zeiteinheit und die Viskosität der Abformmasse sind aufeinander abgestimmt. Bei laufender Befüllung des Abformraumes wird der Unterdruck und der Einspeisedruck im wesentlichen konstant gehalten, so daß das Abformmaterial den Abformraum mit gleichbleibender Geschwindigkeit füllt (also insbesondere ohne Stillstand), wobei die Front des Abformmateriales im Abformraum angefundene Flüssigkeiten (Wasser, Speichel, Blut) vor sich herschiebt. Diese Flüssigkeiten werden dann über das Vakuum-Anschlußelement abgesaugt. Durch dieses kontinuierliche Füllen des Abformraumes ist gewährleistet, daß keine eingeschlossenen Blasen an durch Zähne gegen die Füllrichtung gebildeten Schattenzonen im Abdruck erhalten werden.

Alternativ kann man bei der laufenden Befüllung des Abformraumes den Unterdruck zunächst absenken und gegen Ende des Füllvorganges etwas ansteigen lassen, wobei die Führung des Unterdruckes und/oder des Förderdruckes insgesamt so erfolgt, daß ein kontinuierlicher Fluß des Abformmateriales erreicht wird. Dabei wird vorzugsweise darauf geachtet, daß das Abformmaterial innerhalb des Löffels nicht zum Stillstand kommt.

Die bei dem erfindungsgemäßen Abformlöffel bevorzugt senkrecht zur Zahnlängsachse erfolgende Befüllung des Abformraumes unter Vakuum gewährleistet insbesondere, daß auch unter dem Zahnäquator liegende Unterschnitte und Zahnzwischenräume verzugfrei und vollständig abgeformt werden. Auch werden die Zahnoberflächen weitgehend druckfrei abgeformt, wodurch Fehler durch elastische Rückstellung des Abformmateriales oder durch etwaige Wirbelbildungen an scharfen Zahnkanten, z.B. im Bereich von Präparationsrändern vermieden werden.

Das Herstellen von Zahnabdrücken unter Verwendung des erfindungsgemäßen Abformlöffels erfolgt mit hoher Erfolgssicherheit, unter Zeitersparnis und in für den Patienten angenehmerer Weise. Dabei werden präzisere Zahnabdrücke als bei herkömmlichen Techniken erhalten. Dies bedeutet nicht nur, daß die Abdrücke kleinere Toleranzen aufweisen, sondern auch, daß eine bessere Benetzung von mehr Oberflächen erfolgt, auch von ungünstiger gelegenen Oberflächen.

Wie schon oben dargelegt, wird bei Anwendung des erfindungsgemäßen Abformlöffels die bewegliche marginale Gingiva von den festen benachbarten Zahnoberflächen abgehoben. Auf diese Weise kann gerade der Bereich des Zahnfleischsaumes gut abgeformt werden. Dies ist dann besonders wichtig, wenn Zähne z.B. zur Aufnahme von Kronen präpariert sind. Die Präparationsgrenze liegt häufig auf Höhe des Zahnfleischsaumes (paramarginal) oder sogar apikal (wurzelwärts) dieses Bereiches (subgingival). Zu dessen vollständiger Erfassung und zur notwendigen Erfassung von etwa 1 mm Zahnwurzeloberfläche apikal der Präparationsgrenze (erforderlich zur korrekten Konturgestaltung der Krone) kann das Abformmaterial bei Anwendung des erfindungsgemäßen Abformlöffels zwischen Zahnfleisch und Zahnwurzeloberfläche einfließen.

Dieses Abformen wird durch das schon angesprochene Abheben des Zahnfleischsaumes unter dem einwirkenden Vakuum ermöglicht, wobei zusätzlich aber auch der schon oben beschriebene gerichtete Fluß des Abformmateriales günstig ist, da die im Zwischenraum zwischen Zahnfleischsaum und Zahnoberfläche im Zahnfleischsulcus bzw. in Zahnfleischtaschen vorhandene Flüssigkeitssäule (Speichel oder Sulcusfluid) vom Abformmaterial gerichtet verdrängt wird. Ein derartiges Verdrängen erfolgt bei herkömmlichen Abformtechniken nicht, da bei diesen die Zähne von okklusal her mit Abformmaterial in Berührung kommen, was bedeutet, daß die verschiedenen Abschnitte eines Zahnfleischsaumes eines Zahnes etwa gleichzeitig mit Abformmaterial überschichtet werden. Damit ist die zwischen Zahnfleischsaum und Zahnoberfläche liegende Flüssigkeitssäule eingeschlossen, und da sie nicht komprimiert werden kann, erhält man im fertigen Abdruck eine entsprechende blasenähnliche Fehlstelle, oder es wird die Abformung subgingival liegender Zahn- oder präparierter Zahnoberflächen verhindert.

Es versteht sich, daß diese im Bereich des marginalen Zahnfleischsaumes lokalisierten Zahnoberflächen vor Einbringen des erfindungsgemäßen Löffels in den Mund des Patienten nach Trocknung im Luftstrom auch zunächst mit einem dünnfließenden Abformmaterial umspritzt werden können. Anschließend an dieses erste Umspritzen wird dann der erfindungsgemäße Löffel aufgesetzt, mit Vakuum beaufschlagt und mit Abformmaterial gefüllt. Das Abformmaterial ist so ausgewählt, daß es zu dem zuerst aufgebrachten dünnfließenden Abformmaterial kompatibel ist und sich mit letzterem im Zuge der Erhärtung verbindet.
Das zunächst manuell angespritzte Abformmaterial dient gleichzeitig auch als Platzhalter, welcher ein Wiederauffüllen tiefer Taschen mit Flüssigkeiten etwa wie Sulcusfluid oder Blut aus dem Taschenfundus nach deren vorausgehender Trocknung verhindert. Bei dem vorgenannten Vorgehen werden Teile des voreingespritzten Materiales verdrängt, andere durchmischen sich mit dem später unter Verwendung des erfindungsgemäßen Löffels eingebrachten Abformmaterial. Eventuell zwischenzeitlich aufgetretene Einblutungen werden wiederum vor der Front des in den Löffel eingebrachten Abformmateriales hergeschoben und an einem der Vakuum-Anschlußelemente abgesaugt. Dieses Vorgehen hat sich z.B. bei Patienten mit tiefen Zahnfleischtaschen und subgingivalen Präparationen bewährt.

Es hat sich besonders bewährt, vor der Abformung einen Retraktionsfaden in die Zahnfleischsulci vorzugsweise der präparierten oder zu präparierenden Zähne einzulegen und diesen bis nach erfolgter Abformung in situ zu lassen, womit die Abformung para- oder subgingivaler präparierter Zahnoberflächen mit der erfindungsgemäßen Methode weiterhin vereinfacht und präzisiert wird.

Ferner kann auf diese Weise insbesondere bei entzündeter Gingiva (Zahnfleisch), die eine erhöhte Blutungsneigung aufweist, der Blutzutritt in den vakuumbeaufschlagten Abformlöffel sorgfältig vermieden werden.

Der Retraktionsfaden kann mit therapeutischen Wirkstoffen, z.B. zur Blutstillung imprägniert sein.

Bei zu präparierenden Zähnen mit para- oder subgingival zu extendierender Präparationsgrenze und etwa tieferen Zahnfleischtaschen hat es sich besonders bewährt, vor Präparationsbeginn (einen oder) mehrere Retraktionsfäden übereinander in die Zahnfleischtaschen einzulegen, um somit eine Verletzung des marginalen Zahnfleischsaumes durch die Präparationsinstrumente vorzubeugen, wobei wenigstens der am weitestens apikale Retraktionsfaden bis nach erfolgter Abformung in situ verbleibt.

Der erfindungsgemäße Abformlöffel ist besonders einfach herzustellen, da das Löffelgrundteil im wesentlichen ähnlichen Aufbau hat wie ein klassischer Abformlöffel. Es sind nur in der Außenwand einige zusätzliche Speiseöffnungen vorgesehen. Die Zufuhr von Abformmaterial zu den Abformmaterial-Speiseöffnungen und die Vakuumbeaufschlagung der Vakuum-Speiseöffnungen erfolgt durch ein auf das Löffelgrundteil aufgesetztes Verteilerteil, welches in der Praxis ein Spritz- oder Gußteil sein kann und preisgünstig mit den notwendigen Kanälen versehen werden kann.

Vorteilhafte Weiterbildungen der Erfindung sind in Unteransprüchen angegeben.

Die Weiterbildungen der Erfindung gemäß den Ansprüchen 2 und 3 sind im Hinblick auf besonders gute Führung des Abformmaterials in gleichbleibender Richtung ohne Einschluß von Blasen von Vorteil.

Werden die verschiedenen Kanalanordnungen, über welche Vakuum und Abformmaterial dem Löffelgrundteil zugeführt werden, gemäß Anpsruch 4 zumindest teilweise als offene Nuten ausgebildet, so läßt sich das Verteilerteil besonders einfach herstellen. Diese Nuten bilden zusammen mit der Außenfläche des Löffelgrundteiles geschlossene Kanäle. Diese Ausbildung der Kanalanordnung ist auch im Hinblick auf gute Desinfizierbarkeit und Sterilisierbarkeit sowie einfache Reinigung nach Anwendung von Vorteil.

Die Weiterbildung der Erfindung gemäß Anspruch 5 gewährleistet ein zwangsweise korrektes Ausfluchten der Speiseöffnungen und der Kanalanordnungen aufeinander.

Wählt man gemäß Anspruch 6 ausgedehnte Positioniermittel, so brauchen diese keine sehr scharfen Vorsprünge und Rücksprünge aufzuweisen, was im Hinblick auf eine Reinigung von Löffelgrundteil und Verteilerteil nachteilig wäre. Trotzdem ist eine zuverlässige Ausfluchtung des Verteilerteiles auf das Löffelgrundteil gewährleistet.

Die Weiterbildung der Erfindung gemäß Anspruch 7 gestattet es, Verteilerteil und Löffelgrundteil zu einer einstückig handhabbaren Einheit zu verbinden, was das Einsetzen in den Mund erleichtert. Andererseits ist gewährleistet, daß man Verteilerteil und Löffelgrundteil auch auf einfache Weise voneinander trennen kann, diese Teile auch aus unterschiedlichen Materialien und unter Verwendung einfacher Formen herstellen kann.

Die Weiterbildung der Erfindung gemäß Anspruch 8 gewährleistet eine noch belastungsfähigere Verbindung zwischen Löffelgrundteil und Verteilerteil.

Bei einem Abformlöffel gemäß Anspruch 9 kann der Zahnarzt das Füllen des Abformraumes mit Abformmaterial visuell kontrollieren.

Bei einem Abformlöffel gemäß Anspruch 10 folgt das Füllen des Abformlöffels symmetrisch.

Mit der Weiterbildung der Erfindung gemäß Anspruch 11 ist gewährleistet, daß bei zufälligem unsymmetrischen Füllen des Abformraumes (etwa bedingt durch Zahnlücken), dann, wenn das flüssige Abformmaterial das eine der Vakuum-Anschlußelemente erreicht, über das andere der Vakuum-Anschlußelemente nach wie vor Flüssigkeiten abgesaugt werden und der noch nicht gefüllte Abschnitt des Abformraumes mit Unterdruck beaufschlagt wird. Dies hat zur Folge, daß sich ein stets auf mindestens eine aktive Vakuum-Speiseöffnung hin gerichteter kontrollierter Fluß des Abformmateriales beim Füllen des Abformraumes ergibt, wobei die genaue Fließrichtung mit durch die Kieferkrümmung und die Zahnsituation vorgegegeben wird.

Die Weiterbildung der Erfindung gemäß Anspruch 12 ist im Hinblick auf ein flächiges Abdichten des Abformraumes von Vorteil. Die Abformraum-Abdichtung erfolgt somit nicht durch Kanten des Abformlöffels sondern über flächig an der Außenseite des Verteilerteiles anliegendes Weichgewebe.

Die Weiterbildung der Erfindung gemäß Anspruch 13 ist im Hinblick auf preiswertes Herstellen von Löffelgrundteil und Verteilerteil von Vorteil. Man kann so diese Teile nach Wunsch als Einwegteile ausbilden.

Stellt man die Teile des Abformlöffels gemäß Anspruch 14 aus Metall her, lassen sich diese Teile sterilisieren und wiederverwenden.

Die Weiterbildung der Erfindung gemäß Anspruch 15 gestattet es, sämtliche Anschlußverbindungen zwischen Abformlöffel und Vakuumquelle bzw. Abformmaterialquelle durch einen einzigen Mehrfachstecker herzustellen. Dies vereinfacht den Einsatz des Abformlöffels.

Mit der Weiterbildung der Erfindung gemäß Anspruch 16 wird erreicht, daß mindestens eine der Vakuum-Speiseöffnungen bis ans Ende des Füllens des Abformraumes mit einem Vakuum-Anschlußstutzen in Verbindung steht. Außerdem wird so verhindert, daß geschlossene Kanäle des Verteilerteiles mit Abformmaterial gefüllt werden, wo es nur sehr schwer wieder entfernt werden könnte.

Gemäß Anspruch 17 läßt sich eine Abformmaterial-Sperre besonders einfach beim Spritzen, Gießen oder spanenden Herstellen des Verteilerteiles herstellen.

Mit der Weiterbildung der Erfindung gemäß Anspruch 18 wird erreicht, daß das Abformmaterial den zwischen Löffel und Weichgeweben begrenzten Formraum ausgehend vom einen Ende zum zweiten Ende hin sukzessive auffüllt. Unter visueller Kontrolle der Bewegung der Front des Abformmateriales kann man die Zufuhr von Abformmaterial dann schon beenden, wenn ein jeweils interessierender Teil des Gebisses vom Abformmaterial umschlossen ist. Der Rest des Formraumes bleibt unausgefüllt. Auf diese Weise erhält man eine nennenswerte Ersparnis an Abformmaterial.

Zuweilen ist es im Dentallabor notwendig, von einem Zahnmodell, das ausgehend von einem Zahnabdruck hergestellt wurde oder von Modellen mit darauf aufgebrachten Zwischenstufen in der Herstellung von Zahnersatz oder von Zahnrestaurationen, Prothesen, Implantaten, Explantaten etc., eine Negativform herzustellen. Diese Arbeit wird Doublieren oder Doublierung genannt.

In der vorliegenden Beschreibung und den Ansprüchen soll unter Doublierung allgemein die Abformung von beliebigen Oberflächenabschnitten von zahntechnischen, zahnmedizinischen oder medizinischen Körpern, insbesondere Formkörpern, außerhalb des Mundes verstanden werden, z.B. von Abschnitten von Modelloberflächen oder Zahnersatzoberflächen oder Prothesenoberflächen, Implantatoberflächen, Explantatoberflächen, usw. Wünscht man sehr genaue durch Doublieren erhaltene Modellabdrücke, so begegnet man ähnlichen Problemen wie beim Abformen von Zähnen. Man kann daher die erfindungsgemäße Vorrichtung zum Herstellen von Zahnabdrücken auch zur Herstellung von Modellabdrücken, also beim Doublieren einsetzen. Allerdings benötigt man zusätzlich zum Löffel noch eine Unterform, die bezüglich ihrer mechanischen Eigenschaften den Weichgeweben im Mundes eines Patienten vergleichbar ist, also insbesondere zusammen dem Löffel einen strömungsmitteldichten Abformraum begrenzen kann. Eine eine derartige Unterform aufweisende Vorrichtung ist Gegenstand des Anspruches 19.

Anspruch 20 gibt eine besonders einfache Art und Weise an, eine sich der Randkontur des Löffels gut anpassende Dichtwand bereitzustellen.

Die Weiterbildung der Erfindung gemäß Anspruch 21 gestattet es, die Verformbarkeit der Dichtwand auf einfache Weise zu modifizieren, indem man die Art des Fluids, welches hinter der Dichtmembran liegt, oder dessen Druck abändert.

Die entsprechenden Varianten sind in den Ansprüchen 22 bis 24 angegeben.

Auch gemäß Anspruch 25 erhält man eine Dichtwand, die sich gut der Randkontur des Löffels anpassen kann, wobei diese Dichtwand keine gesonderte Spanneinrichtung benötigt, ebenso wenig eine Verbindung zu einer Unterdruck- oder Druckquelle.

Die Weiterbildung der Erfindung gemäß Anspruch 26 ist im Hinblick auf besonders einfachen Aufbau und Fluiddichtheit der Dichtwand von Vorteil.

Die Weiterbildung der Erfindung gemäß Anspruch 27 ermöglicht es von unterschiedlich hohen Modellen Abformungen unter sparsamen Einsatz von Abformmaterial herzustellen.

Die Weiterbildung der Erfindung gemäß Anspruch 28 ermöglicht ein kontinuierliches Einstellen der Höhe des Löffels.

Gestaltet man den Löffel gemäß Anspruch 29 aus, so nimmt er im noch nicht auf das Formunterteil aufgesetzten Zustand stets immer die gleiche Stellung ein. Dies erleichtert ein präzises Positionieren und schont ferner die Dichtwand des Formunterteiles beim Aufsetzen des Löffels.

Die Weiterbildung der Erfindung gemäß Anspruch 30 gewährleistet, daß kein Abformmaterial in die Führung für das bewegliche Wandteil gelangt.

Die Weiterbildung der Erfindung gemäß Anspruch 31 ist im Hinblick auf Gewährleistung hygienischer Verhältnisse ohne Einsatz von Sterilisationsverfahren von Vorteil.

Die Weiterbildung der Erfindung gemäß Anspruch 32 dient einem blasenfreien vollständigen Füllen des Formraumes.

Die Weiterbildung der Erfindung gemäß Anspruch 33 gestattet es, bei der Herstellung von Modellabdrücken das Abformmaterial vom hinteren Ende des Modelles her einströmen zu lassen, ohne daß hierfür der Löffel mit einem Kanalsystem versehen werden müßte.

Ist der zum Abformen verwendete Löffel starr, so benötigt man zum Herstellen einer Abformung eine fest vorgegebene Menge an Abformmaterial. Bei Verwendung eines Löffels gemäß Anspruch 34 kann sich die den Formraum teilweise begrenzende Formraummembran in ihrer Geometrie dem vom Modell eingenommenen Raum anpassen, so daß der Abdruck nur die dem Modell am nächsten benachbarten interessierenden Raumbereiche erfaßt.

Mit der Weiterbildung der Erfindung gemäß Anspruch 35 wird erreicht, daß der Formraummembran eine Vorkonturierung gegeben wird.

Bei der Vorrichtung der gemäß Anspruch 36 kann man die Vorkonturierung der Formraummembran sehr gut reproduzierbar vornehmen.

Gemäß Anspruch 37 erfolgt das Anlegen der Formraummebran gegen das konturierte Stützelement flächig durch Unterdruckbeaufschlagung.

Gemäß Anspruch 38 erhält man den gleichen Vorteil unter Verwendung einer Überdruckquelle, wobei letztere z.B. eine Quelle für Abformmaterial sein kann, welche das Abformmaterial unter Überdruck abgibt.

Auch die Weiterbildung der Erfindung gemäß Anspruch 39 erlaubt ein einfaches Anpassen der Geometrie des Formraumes an die Größe eines abzuformenden Modelles.

Gemäß Anspruch 40 kann man die Kraft, welche die Membran entgegen dem zugeführten Abformmaterial vorspannt auf einfache Weise vorgeben und durch Auswahl unterschiedlich schwerer Gewichtstücke die Wandstärke des Abdruckes variieren.

Dabei kann man gemäß Anspruch 41 messen, wie das Abformmaterial zunehmend das Modell umfließt, und nach Erreichen einer vorgegebenen Höhe über den Spitzen des Modelles die Zufuhr von Abformmaterial beenden.

Auch die Weiterbildung der Erfindung gemäß Anspruch 42 erfolgt im Hinblick auf sparsamen Einsatz von Abformmaterial, insbesondere bei der Herstellung von Teilabdrücken, die sich nur über einen Teil eines Kiefers erstrecken.

Nachstehend wird die Erfindung anhand von Ausführungsbeispielen unter Bezugnahme auf die Zeichnung näher erläutert. In dieser zeigen:
- Figur 1:: eine Aufsicht auf einen Löffel zum Herstellen eines Unterkiefer-Abdruckes;
- Figur 2:: einen tranversalen Schnitt durch den Löffel nach Figur 1 längs der dortigen Schnittlinie II-II in vergrößertem Maßstabe, welcher im Munde eines Patienten über den Unterkiefer-Zahnreihen reponiert ist.
- Figur 3:: eine Aufsicht auf die Unterseite eines Löffels zum Herstellen eines Oberkiefer-Abdruckes;
- Figur 4:: einen transversalen Schnitt durch den Löffel nach Figur 3 längs der dortigen Schnittlinie IV-IV;
- Figur 5:: eine Frontansicht des Löffels nach den Figuren 3 und 4;
- Figur 6:: einen Schnitt durch den Nasen-Mund-Rachenbereich des Kopfes eines Patienten, anhand dessen die Anwendung eines Löffels nach den Figuren 3 bis 5 erläutert wird;
- Figur 7:: eine Aufsicht auf die Unterseite des Löffels nach den Figuren 3 bis 5 unter Arbeitsbedingungen;
- Figur 8:: einen in der Längsmittelebene genommen Schnitt durch einen abgewandelten Löffel;
- Figur 9:: eine Aufsicht auf die Oberseite des Löffels nach Figur 8 sowie eine schematische Darstellung von dem Löffel zum Herstellen eines Abdruckes zugeordneten Versorgungseinrichtungen;
- Figur 10:: eine Frontansicht des Löffels nach den Figuren 8 und 9;
- Figur 11:: eine Aufsicht auf die Rückseite des Löffels nach den Figuren 8 bis 10;
- Figur 12:: einen longitudinalen Schnitt durch einen weiter abgewandelten Löffel zum Herstellen eines Oberkiefer-Abdruckes;
- Figur 13:: eine Aufsicht auf die Oberseite des Löffels nach Figur 12;
- Figur 14:: einen vergrößerten Teilschnitt durch einen Randbereich eines Löffels, in welchem Einzelheiten einer Dichtleistenanbringung wiedergegeben sind;
- Figur 15:: eine ähnliche Ansicht wie Figur 14, in welcher eine abgewandelte Dichtleistenanordnung gezeigt ist;
- Figur 16:: einen schematischen Teilschnitt durch einen weiter abgewandelten Löffel, welcher in Verbindung mit vor Einbringen in den Löffel erwärmten und durch Abkühlung härtenden Abformmaterialien verwendet wird;
- Figur 17:: eine ähnliche Ansicht wie Figur 9, in welcher ein weiter abgewandelter Löffel dargestellt ist; und
- Figur 18:: einen transversalen Teilschnitt durch einen weiter abgewandelten Löffel.
- Figur 19:: eine Aufsicht auf die zahnzugewandte Oberseite eines weiteren Oberkiefer-Abformlöffels gemäß der vorliegenden Erfindung;
- Figur 20:: eine Aufsicht auf die Unterseite des in Figur 19 gezeigten Abformlöffels;
- Figur 21:: einen Längsmittelschnitt durch den in Figuren 19 und 20 gezeigten Abformlöffel;
- Figur 22:: eine abgewickelte Darstellung der Innenseite eines Verteilerteiles eines Abformlöffels nach den Figuren 19-21;
- Figur 23:: einen transversalen Schnitt durch das Verteilerteil längs der Schnittlinie V - V von Figur 22.
- Figur 24:: eine Aufsicht auf die unter Einsatzbedingungen untenliegende Seite eines weiter abgewandelten Löffels zum Herstellen eines Unterkiefer-Abdruckes;
- Figur 25:: eine Aufsicht auf die unter Einsatzbedingungen obenliegende Seite des Löffels nach Figur 24;
- Figur 26:: eine in Abwicklung dargestellte Aufsicht auf die Innenfläche eines Verteilteiles des Löffels nach den Figuren 24 und 25 in verkleinertem Maßstabe;
- Figur 27:: einen Längsmittelschnitt durch einen abgewandelten Löffel zum Herstellen eines Oberkiefer-Abdruckes, wobei der am weitesten links gelegene Teil des Löffels in einer versetzten Ebene wiedergegeben ist, welche durch einen der Anschlußstutzen des Löffels gelegt ist;
- Figur 28:: einen transversalen Schnitt durch ein Verteilteil des Löffels nach Figur 27;
- Figur 29:: einen transversalen Schnitt durch einen weiter abgewandelten Löffel, der zum Doublieren von Zahnmodellen verwendet wird, zusammen mit einer Unterform, die zusammen mit dem Löffel einen dichten Hohlraum begrenzt, der das Zahnmodell umgibt;
- Figur 30:: einen horizontalen Schnitt durch die in Figur 29 gezeigte Doubliervorrichtung;
- Figur 31 bis 33:: transversale Schnitte durch abgewandelte Unterformen, die zusammen mit einem Löffel eine Doubliervorrichtung bilden können;
- Figur 34:: eine Aufsicht auf die Rückseite eines Einfachlöffels für Doublierzwecke;
- Figur 35:: einen transversalen Schnitt durch eine nochmals abgewandelte Doubliervorrichtung, bei welcher der Löffel eine verformbare Formraummembran aufweist; und
- Figuren 36 und 37:: ähnliche Ansichten wie Figur 35, in welchen weiter abgewandelte Doubliervorrichtungen wiedergegeben sind.

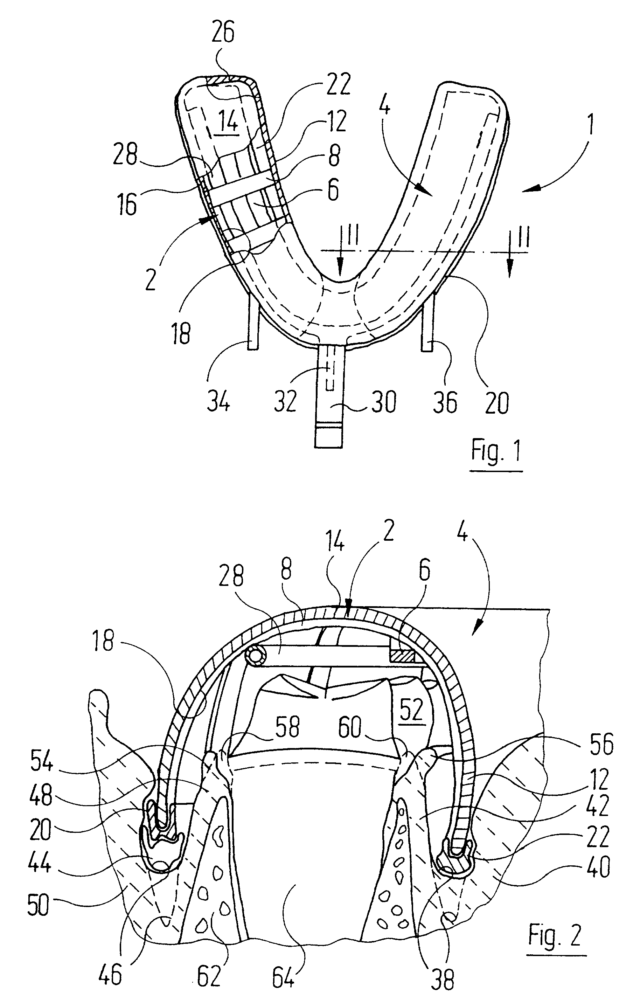

In Figuren 1 und 2 trägt ein Löffel zum Herstellen eines Abdruckes der Unterkiefer-Zahnreihe eines Patienten insgesamt das Bezugszeichen 1. Der Löffel hat in Aufsicht gesehen die Form einer Parabel oder vereinfacht eines V oder U, dessen Schenkel einen Winkel von etwa 50° miteinander einschließen und leicht gekrümmt sind, wie aus der Zeichnung ersichtlich. Auf diese Weise ist der Löffel grob der Kontur eines Unterkiefers angepaßt.

Ein Oberkiefer-Löffel hat dagegen etwa elliptische Form.

Die Größe des Löffels richtet sich nach epidemiologischen Daten und Häufigkeitsverteilungen unterschiedlicher Kiefergrößen. Für die Praxis kann es ausreichen, drei unterschiedliche Standard-Löffelgrößen jeweils für Oberkiefer und Unterkiefer vorzusehen.

Der Löffel 1 besteht aus einem starren käfigähnlichen Skelett 2 und einem über diesem liegenden transparenenten Überwurfteil 4, vorzugsweise einem Kunststoff-Einwegartikel Das Skelett 2 umfaßt eine in Aufsicht gesehen U-förmig gebogene Schiene 6, an welcher transversale Spanten 8 befestigt sind.

In transversaler Schnittansicht gesehen hat das Überwurfteil 4 im wesentlichen U-förmige Gestalt. Eine innenliegende Randwand 12 ist über eine bogenförmige Basiswand 14 mit einer außenliegendes Randwand 16 verbunden. Diese Wände begrenzen zusammen eine Abformrinne 18.

Auf die freien, unter Arbeitsbedingungen untenliegenden Enden der Spanten 8 sind zugleich Längsspanten des Skelettes 2 bildende Dichtleisten 20, 22 fest aufgesetzt. Diese erstrecken sich bis zu transversalen Stirnwänden 26 an den Enden der Schenkel des Löffels 1.

Die Dichtleisten 20, 22 können zumindest in Abschnitten aus weichem Material gefertigt sein.

Längs der äußeren Randwand 16 verläuft ein U-förmiges Verteilrohr 28. Dieses hat einen mittleren als T-Stück ausgebildeten und von der Randwand 16 getragenen Abschnitt. Letzterer kommuniziert mit einem Anschlußstutzen 30, der unter Betriebsbedingungen mit einer Quelle für flüssiges Abformmaterial verbunden ist.

In Figur 1 unter dem Anschlußstutzen 30 liegend ist ein Anschlußstutzen 32 vorgesehen, der mit einer Unterdruckquelle verbunden wird. Symmetrisch zu beiden Seiten der Längsmittelebene des Löffels 1 sind zwei weitere Vakuum-Anschlußstutzen 34, 36 vorgesehen. Letztere liegen jeweils mesial der Eckzähne zwischen den Eckzahn und dem seitlichen Schneidezahn.

Figur 2 zeigt einen oben beschriebenen Löffel unter Arbeitsbedingungen an einem Patienten. Die innenliegende-Dichtleiste 22 sitzt in einer Umschlagfalte 38, die zwischen der Zunge 40 und dem zungenseitigen Zahnfleisch 42 liegt.

Die außenliegende Dichtleiste 20 stützt sich bei der hier betrachteten Anwendung über einen plastischen Dichtkörper 44 am Boden einer bukkalen Umschlagfalte 46 ab, die zwischen dem bukkalen Zahnfleisch 48 und dem Wangengewebe 50 liegt. Der Dichtkörper 44 kann z.B. ein Wachsdraht, ein Schlauch, eine geformte Silikonmasse, weichbleibender Kunststoff, ein Wattepfropfen, ein plastisch verarbeiteter, unter Anwendungsbedingungen intraoral am in situ befindlichen Löffel ausgeformter und thermo- oder duroplastisch erhärtender Kunststoff (Herstellung eines individualisierten Löffels) oder dergleichen sein.

Die Stirnwände 26 oder ggf. unter ihnen vorgesehene dem Dichtkörper 44 enstprechende Dichtkörper arbeiten mit den hinter der Zahnreihe liegenden mit Weichgewebe bedeckten Kieferabschnitten dicht zusammen. Auf diese Weise begrenzt der Löffel 1 insgesamt zusammen mit den der Zahnreihe benachbarten Geweben einen strömungsmitteldichten Abformraum 52.

Unter Arbeitsbedingungen ist der Abformraum 52 über die Anschlußstutzen 32 bis 36 mit einer Unterdruckquelle verbunden. Durch die Unterdruckbeaufschlagung werden die weichen Gewebe aus ihrem in Figur 2 gestrichelt angedeuteten Normalzustand in den durch ausgezogene Linien wiedergegebenen Zustand gebracht. In diesem sind die dem Zahnhals benachbarten Ränder 54, 56 des Parodonts vom Zahnhals abgehoben, so daß dieser über Spalte 58, 60 zum Abformraum 52 hin offen ist.

Bei 62 ist der knöcherne Alveolarfortsatz angedeutet.
Bei 64 ist ein präparierter Unterkiefer-Molar gezeigt.

Verbindet man unter den in Figur 2 gezeigten Bedingungen den Anschlußstutzen 30 mit einer Quelle für flüssiges Abformmaterial mit verglichen mit Wasser hoher Viskosität ("dünnflüssiges" Abformmaterial), so fließt dieses in erster Linie unter dem durch die Abformmaterialquelle vorgegebenen Einspeisedruck, aber auch unterstützt durch den in Abformraum herrschenden Unterdruck in den Abformraum 52 eingeschlossen die Spalte 58, 60 und füllt diesen vollständig aus, wobei die Front des flüssigen Abformmateriales im Abformraum 52 angefundene Flüssigkeiten (Wasser, Speichel, Blut) vor sich herschiebt, so daß diese Flüssigkeiten zu keinen Blasen im Abdruck führen können. Die Flüssigkeiten werden über die Anschlußstutzen 32 bis 36 abgesaugt.

Nach dem Aushärten des Abformmateriales erhält man einen sehr präzisen und paßgenauen Abdruck der Unterkiefer-Zahnreihe, insbesondere auch im Bereich der Zahnfleischsäume.

Der Löffel 1 ist ein starres zumindest teilweise (Überwurfteil 4 oder Teil hiervon) aus transparentem Material hergestelltes Teil. Auf diese Weise kann man das Fortschreiten des Füllens des Abformraumes 52 mit einem Abformmaterial, welches vorzugsweise gefärbt ist, visuell gut verfolgen.

Einzelheiten der bevorzugten Arbeitsbedingungen zur Herstellung eines Abdruckes und hierzu verwendbarer Abformmaterialien werden weiter unten noch genauer beschrieben.

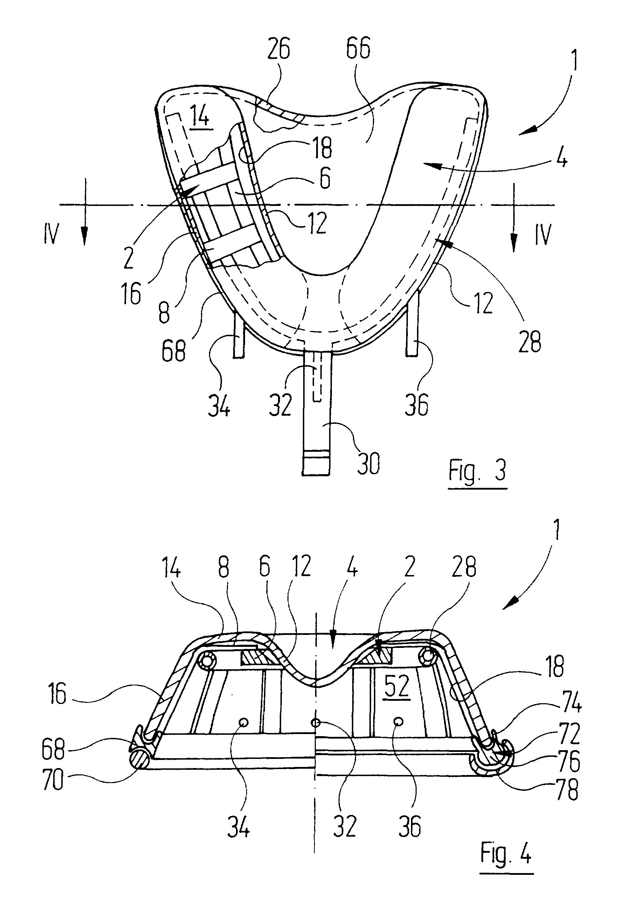

In den Figuren 3 und 4 ist ein ähnlich aufgebauter Löffel 1 dargestellt, der jedoch zum Herstellen eines Abdruckes eines Oberkiefers verwendet wird. Von der Funktion her vergleichbare Teile sind wieder mit denselben Bezugszeichen versehen. Der Löffel 1 nach den Figuren 3 und 4 unterscheidet sich in erster Linie von demjenigen nach den Figuren 1 und 2 dadurch, daß er zusätzlich eine mittige Wand 66 aufweist, welche der Kontur des Gaumensegels nachgebildet ist, und zwar derart, daß sie von letzterem einen mittleren Abstand von 1 bis 2 cm aufweist. Darüber hinaus unterscheidet sich der Löffel 1 nach den Figuren 3 und 4 von demjenigen nach Figuren 1 und 2 durch seine abgewandelte Querschnittsform, wie aus der Zeichnung ersichtlich.

Bei den freien Rändern des Löffels 1 sind in Figur 4 rechts und links der Mittellinie zwei verschiedene Dichtungsanordnungen wiedergegeben. Im linken Abschnitt von Figur 4 ist eine im wesentlichen H-förmigen Querschnitt aufweisende mit den transversalen Spanten zu einem Skelett verbundene Dichtleiste 68 gezeigt, die zwischen ihren oberen Armen den freien Rand der Randwand 16 aufnimmt, während ihre unteren Arme ein verformbares zylindrisches Dichtelement 70 aufnehmen.

In der rechten Hälfte von Figur 4 ist auf den freien Rand der Randwand 16 eine ebenfalls mit den transversalen Spanten zu einem Skelett verbundene Dichtleiste 72 aufgesetzt, welche mit Armen 74 die Randwand zwischen sich aufnimmt und einen kreisförmigen Querschnitt aufweisenden Kopfabschnitt 76 hat, auf welchem ein C-förmigen Querschnitt aufweisendes Dichtelement 78 angeordnet ist.

Ein solcher mehrlagiger Aufbau der Dichtstellen zwischen Löffel und Gewebe kann im Hinblick auf ein Ausgleichen größerer geometrischer Unterschiede vorteilhaft sein, wozu die äußeren Dichtelemente 70 bzw. 78 vom Arzt nach Bedarf verwendet werden, wobei auch mehrere Dichtelemente 78 übereinander verwendet werden können.

Bei den in Figuren 1 bis 5 gezeigten Löffeln kann man das Überwurfteil 4 auch aus schwächerem Material herstellen, da man ja die starre fachwerkähnliche Tragstruktur in Form der belastungsfähigen Schienen 6 und der Spanten 8 sowie der mit diesen verbundenen Dichtleisten 20, 22 bzw. 68, 72 hat, welche sich in Längsrichtung der Abformrinne 18 erstrecken und beim Abformen des Kiefers in das Abformmaterial fest ganz oder teilweise eingebettet werden. Sind die Dichtleisten aus weichem Material gefertigt, so tragen sie nicht zur Steifigkeit des Löffels bei. Auch in diesem Falle ist aber gewährleistet, daß das ausgehärtete Abformmaterial zusammen mit in es eingebetteten Löffelabschnitten eine stabile steife Struktur darstellt.

In diesem Falle kann man dann den Löffel selbst statt aus Glas auch aus Kunststoff oder als Folienformteil (z.B. vakuumverformte Polyproyplenfolie) herstellen. Verzichtet man auf den Vorteil eines visuellen Kontaktes zum Inneren des Abformraumes, kann man den Löffel auch aus Metall herstellen.

In Abwandlung der oben beschriebenen Ausführungsbeispiele kann man den Löffel auch als einstückiges Wegwerfteil ausbilden oder aus mehr als zwei Löffelteilen zusammensetzen. Zwei- oder mehrteilige Abformlöffel haben dabei den Vorteil, daß man eines der Löffelteile als generell verwendbares Standardteil auslegt, während man in andere der Löffelteile eine Feinanpassung der Größe an den Kiefer des jeweiligen Patienten legen kann. Dabei erfolgt diese Anpassung vorzugsweise in einem als Wegwerfteil ausgebildeten Löffelteil.

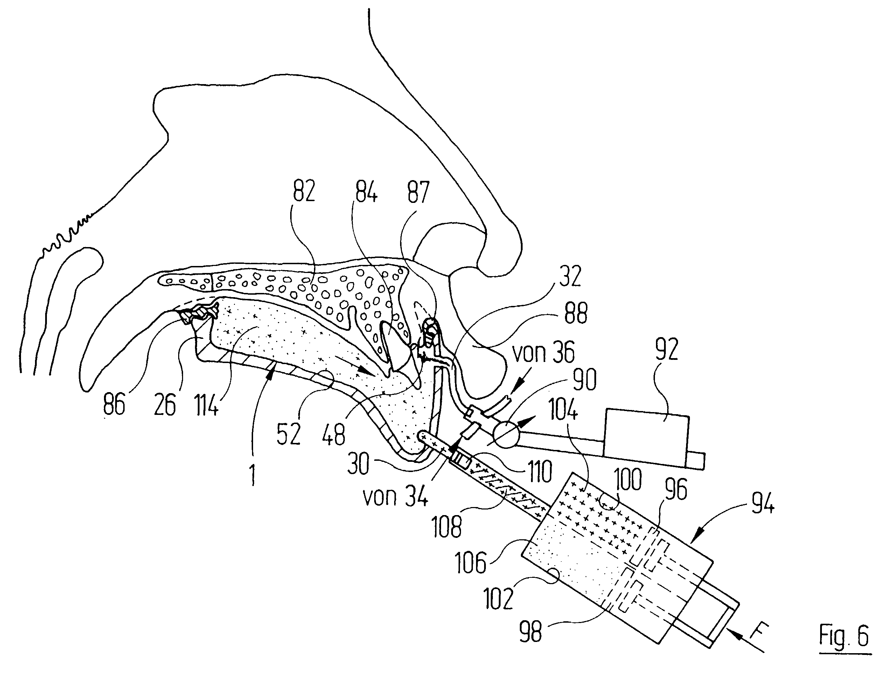

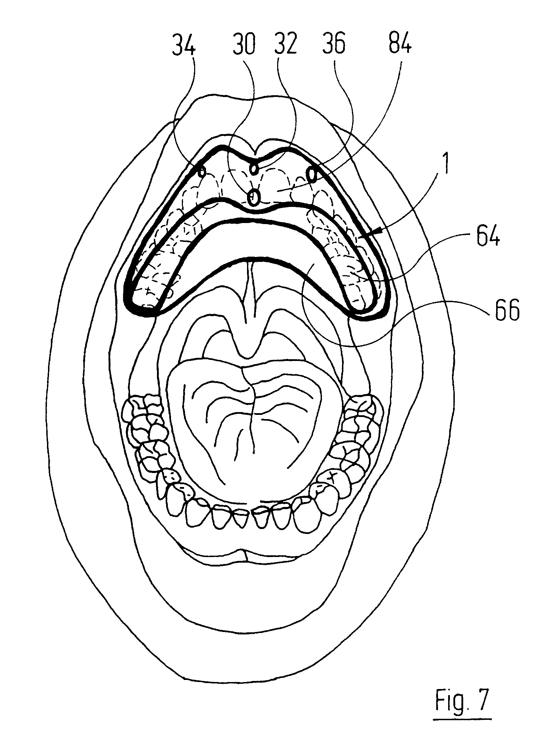

Die Figuren 6 und 7 zeigen den Löffel nach den Figuren 3 bis 5 unter Einsatzbedingungen.

Im Sagittalschnitt nach Figur 6 ist bei 82 der harte Gaumen eines Patienten gezeigt. Mit 84 ist ein präparierter Schneidezahn gekennzeichnet.

Unter dem freien Rand der hinteren Stirnwand 26 des Löffels 1 ist eine plastisch verformbare Dichtmasse 86 wiedergegeben, der vordere Abschnitt der Randwand 16 sitzt (ggf. wieder unter Zwischenschaltung eines Dichtkörpers 87) in demjenigen Bereich der Umschlagfalte 38, welcher sich zwischen der Oberlippe 88 und dem außenliegenden labialen Zahnfleisch 48 befindet.

Die drei Vakuum-Anschlußstutzen 32, 34, 36 sind über eine gemeinsame Vakuumleitung 89 und einen Unterdruckregler 90 mit der Saugseite einer Saugeinrichtung 92 verbunden. Der Abformmaterial-Anschlußstutzen 30 ist mit dem Auslaß einer Tandemspritze 94 verbunden, deren Stempel 96, 98 wahlweise getrennt oder zusammen verlagerbar sind. Die beiden Zylinder 100, 102 der Tandemspritze enthalten einen flüssigen Binder 104 bzw. einen flüssigen, mit Katalysator versetzten Härter 106. Die beiden Zylinder 100, 102 stehen mit einem Mischer 108 in Verbindung, der z.B. ein Mischrohr mit darin angeordneten Mischwendeln aufweisen kann. Beim Einlaß des Anschlußstutzens 30 ist ein Ventil 110 dargestellt, welches bei nicht angesetzter Tandemspritze 94 verschlossen ist, so daß unter diesen Bedingungen im Abformraum 52 ein Vakuum erzeugt werden kann, um den Löffel 1 sicher auf dem Oberkiefer zu positionieren. Mit dem Aufsetzen der Tandemspritze 94 wird das Ventil 11 dann zwangsweise geöffnet. In Abwandlung kann man an dem Abformmaterial-Anschlußstutzen 30 eine angeformte Membran vorsehen, welche beim Aufsetzen der Tandemspritze 94 perforiert wird.

Ebenfalls in Abwandlung kann man anstelle einer Tandemspritze 94 mit angesetztem Mischrohr eine separate Mischvorrichtung verwenden und gemischtes Material in eine Einfachspritze einfüllen, die dann an den Abformmaterial-Anschlußstutzen 30 angesetzt wird.

Figur 6 zeigt eine fortgeschrittene Phase des Einfüllens von Abformmaterial. Dieses wird über die im Inneren des Löffels 1 verlaufende U-förmige Verteilleitung 28 zu den hinteren Enden der Schenkel der Abformrinne 18 gefördert. Durch die auf die Stempel 96, 98 ausgeübte Kraft wird das Abformmaterial zwangsweise in den Abformraum 52 eingebracht und zunehmend nach vorne gedrückt.

Beim Füllen des Abformraumes 52 von hinten nach vorne schiebt die Stirnfläche des flüssigen Abformmateriales Speichel- oder Blutreste vor sich her zu den Vakuumanschlußstutzen 32, 34, 36. Das zunehmende Ausfüllen des Abformraumes 52 durch das vom Mischer 108 abgegebene Abformmaterial 114 kann visuell kontrolliert werden, wenn das Überwurfteil 4 aus transparentem Material hergestellt worden ist. Insbesondere kann visuell kontrolliert werden, wann Abformmaterial in die transparenten Vakuum-Anschlußstutzen 32, 34, 36 eintritt. Sind diese alle drei mit Abformmaterial gefüllt, kann das Bewegen der Stempel 96, 98 beendet werden.

Die Aushärtecharakteristik des Abformmateriales 114 ist über die Wahl des Härters 106 und des in diesem und/ oder dem Binder enthaltenen Katalysators bzw. Inhibitors so gewählt, daß das Abformmaterial bis zum vollständigen Ausfüllen des Abformraumes 52 noch gut flüssig ist. Nach Aushärten des Abformmateriales und Lösen der Verbindungen an den Anschlußstutzen 30 bis 36 kann dann der Löffel 1 in bekannter Weise vom Oberkiefer abgenommen werden, wobei die Anschlußstutzen 30 bis 36 zugleich als Griff dienen können.

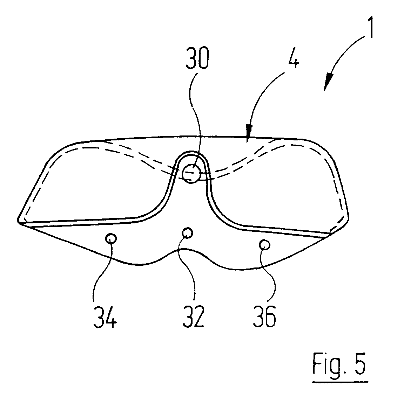

Wie insbesondere aus den Figuren 5, 6 und 7 ersichtlich, liegen die Vakuum-Anschlußstutzen 32, 34, 36 gleichermaßen auf Höhe oder apikal der Zahnhälse im Bereich der Umschlagfalte. Die beiden seitlichen Anschlußstutzen liegen in tangentialer Verlängerung zu den Seitenzahnreihen, der mittlere Anschlußstutzen liegt zwischen den beiden mittleren Schneidezähnen. Durch diese Anordnung ist gewährleistet, daß der Löffel auch bei asymmetrischem Zahnbogen zuverlässig gefüllt wird.

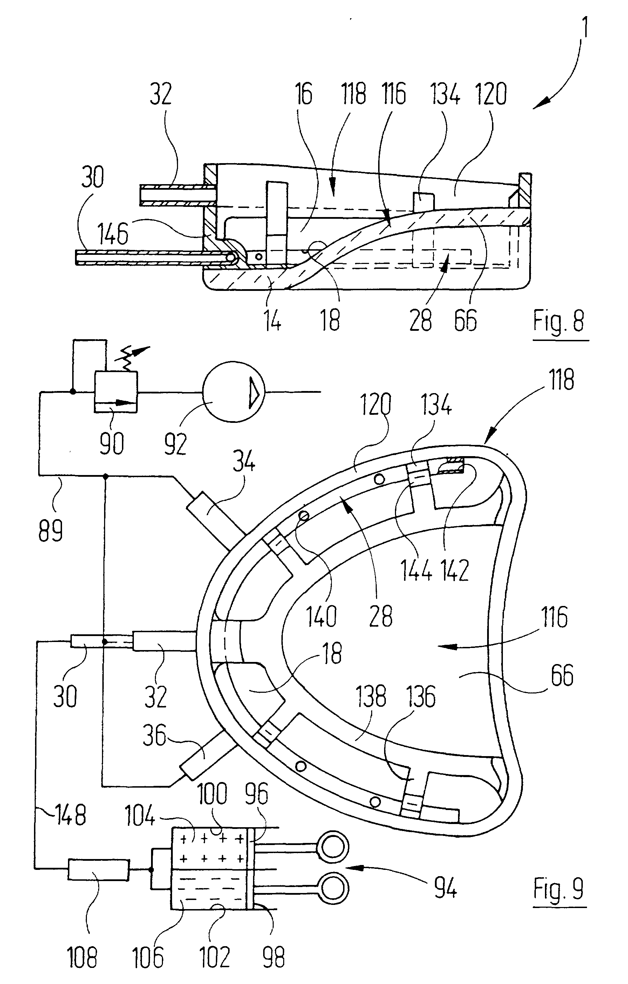

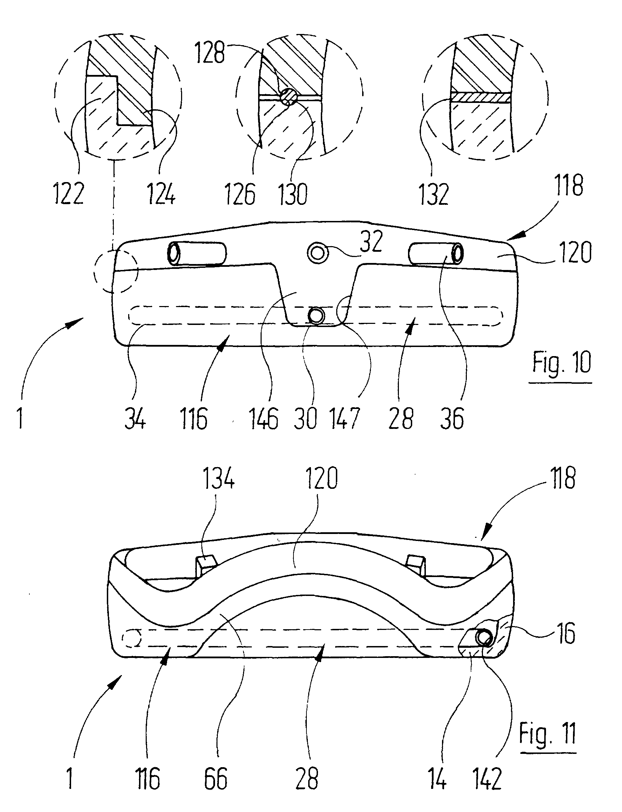

Bei dem abgewandelten Löffel nach den Figuren 8 bis 11 ist ein Löffelgrundteil 116 vorgesehen, welches als starrer Glaskörper oder starrer transparenter Kunststoffkörper ausgebildet ist. Das Löffelgrundteil entspricht in seiner Grundgeometrie im wesentlichen dem Löffel 1 nach den Figuren 3 bis 5, nur ist seine außenliegende Randwand 16 etwas niedriger. Auf das Löffelgrundteil 116 ist ein insgesamt mit 118 bezeichnetes Löffelrandteil aufgesetzt. Dieses hat eine außenliegende Randwand 120, die eine stetige Fortsetzung der Randwand 16 des Löffelgrundteiles 116 darstellt. Wie aus Figur 10 ersichtlich, kann man eine Dichtstelle zwischen den Randwänden 16 und 120 dadurch herstellen, daß man am oberen Ende der Randwand 16 eine nach oben vorstehende außenliegende Feder 122 anformt, während die Randwand 120 eine innenliegende nach unten hängende Feder 124 aufweist, die mit der Feder 122 nach Art einer Feder-/ Nut-Verbindung zusammenarbeitet.

Als Alternative kann man, wie ebenfalls in Figur 10 dargestellt, in den Stirnflächen der Randwände 16 und 120 fluchtende Nuten 126, 128 vorsehen, in welchen jeweils ein Abschnitt einer Dichtung 130 einsitzt.

Nochmals wahlweise kann man die beiden Stirnflächen der Randwände 16 und 18 auch durch eine plastische Dicht- oder Klebemasse 132 verbinden.

Es versteht sich, daß die vorgenannten Alternativen zur Herstellung einer dichten Verbindung zwischen den Randwänden 16 und 120 auch untereinander kombiniert werden können.

Von der Randwand 120 des Löffelrandteiles 118 hängen verschiedene vertikale Stege 134 nach unten. Diese sind mit radial verlaufenden Querstegen 136 verbunden, deren radial innenliegende Enden eine inneren Längssteg 138 tragen. Damit bilden die Randwand 120 und die Stege 134, 136 und 138 insgesamt eine käfigähnliche Struktur, durch welche das Löffelrandteil 118 versteift wird.

Beim hier betrachteten Ausführungsbeispiel ist das zu den hinteren Enden der Abformrinne 18 führende U-förmige Verteilrohr 28 in seinen beiden Schenkeln jeweils mit zwei im mittleren Schenkelabschnitt liegenden nicht direkt auf die Zahnreihe gerichteten, gegebenenfalls auch von der Zahnreihe wegweisenden Austrittsöffnungen 140 versehen. Aufgrund dieser Ausbildung des Verteilrohres 28 wird auch schon zu Beginn der Füllphase dem vorderen Abschnitt des Abformraumes 52 flüssiges Abformmaterial zugeführt.

Die Größe der in der Wand des Verteilrohres 28 vorgesehenen Austrittsöffnungen 140 und die Größe des offenen hinteren Endes 142 des Verteilrohres 28 sind aber unter Berücksichtigung der Viskosität des flüssigen Abformmateriales so gewählt, daß weiterhin das Füllen des Abformraumes in erster Linie von hinten nach vorne, also in Richtung auf die Vakuum-Anschlußstutzen 32, 34, 36 zu erfolgt.

Wie aus der Zeichnung ersichtlich, ist das Verteilrohr 28 in verdickte Fußabschnitte 144 eingebettet, welche bei den unteren Enden der vertikalen Stege 134 liegen.

Das Löffelrandteil 118 ist vorzugsweise aus transparentem Kunststoffmaterial hergestellt, so daß man, wie oben stehend unter Bezugnahme auf die Figuren 1 bis 7 schon beschrieben, das Abheben der Zahnfleischsäume von den Zahnhälsen durch geeignet große Unterdruckbeaufschlagung und das Füllen des Abformraumes 52 visuell verfolgen kann. Auch die Vakuum-Anschlußstutzen 32 bis 36 sind wieder aus transparentem Kunststoffmaterial hergestellt, vorzugsweise an das Löffelrandteil 118 angeformt.

Alternativ kann man die Vakuum-Anschlußstutzen 32 bis 36 auch nur teilweise transparent ausbilden oder über transparente Verbindungsstücke an die gemeinsame Vakuumleitung 89 anschließen.

Wie aus Figur 10 ersichtlich, hat das Löffelrandteil in seinem mittleren, vorderen Abschnitt eine herabhängende Schürze 146, in welche der mit dem Verteilrohr 28 in Verbindung stehende Abformmaterial-Anschlußstutzen 30 eingespritzt ist und welche in einer Ausnehmung 147 der Randwand 16 einsitzt. Auf diese Weise befinden sich alle Strömungsmittelanschlüsse und alle Strömungsmittel verteilenden Kanäle am Löffelrandteil 118 und bilden zusammen mit diesem ein kostengünstiges Wegwerfteil. Der starre, verwindungsfreie Abschnitt des Löffels, nämlich das aus z.B. Glas oder transparentem Kunststoff gefertigte Löffelgrundteil 116 ist dagegen von schwierig zu reinigenden Elementen frei. Das Löffelgrundteil 116 läßt sich somit nach Sterilisierung wieder verwenden.

In weiterer Fortbildung der Erfindung kann man die verschiedenen Anschlußstutzen in einem gemeinsamen Steckverbinder (ggf. mehrteilig) zusammenfassen.

In Abwandlung des oben beschriebenen Ausführungsbeispieles kann man das Verteilerrohr 28 auch durch eine an das Löffelrandteil 118 angeformte, C-förmigen Querschnitt aufweisende nach unten offene Verteilrinne ersetzen, welche zusammen mit dem Boden der Abformrinne 18 einen Verteilkanal begrenzt.

Der oben stehend unter Bezugnahme auf die Figuren 8 bis 11 beschriebene Löffel wird wie folgt eingesetzt:
Zunächst wird ein desinfiziertes bzw. sterilisiertes Löffelgrundteil 116 mit einem Wegwerf-Löffelrandteil 118 ggf. unter Verwendung einer Dichtmasse zu einem Löffel 1 zusammengesetzt, wie er in den Figuren 8 bis 11 dargestellt ist. Dieser Löffel wird unter visueller Kontrolle auf den Oberkiefer des Patienten aufgesetzt. Ist die richtige Lage erreicht, wird der Unterdruckregler 90 auf einen Wert grob eingestellt, bei welchem der Löffel sich unverrückbar an den den Oberkiefer-Zahnbogen umgebenden Weichgeweben festsaugt. Unter weiterer visueller Kontrolle wird dann der Unterdruck so stark erhöht, daß sich die Zahnfleischsäume von den Zahnhälsen geringfügig abheben wie oben stehend unter Bezugnahme auf die Figuren 1 bis 7 schon erläutert wurde. Der Unterdruckregler 90 hält dann diese Druckabsenkung aufrecht, welche in der Regel zwischen 10 und 500 mbar, vorzugsweise zwischen 10 und 200 mbar, besonders bevorzugt zwischen 50 und 150 mbar beträgt.

Nun wird durch Aufstecken der vom Mischer 108 herkommenden Abformmaterial-Speiseleitung 148 auf den Anschlußstutzen 30 das Ventil 11 zwangsweise geöffnet, und unter dem und dem auf die Stempel 96, 98 ausgeübten Druck und unter Mitwirkung des im Abformraum 52 herrschenden Unterdrucks strömt das flüssige Abformmaterial durch das Verteilrohr 28 und tritt durch dessen offene hintere Enden 142 und falls vorhanden die Austrittsöffnungen 140 aus. Der Abformraum 52 füllt sich wieder von hinten nach vorne mit Abformmaterial, welches Speichel und Blut vor sich her zu den Anschlußstutzen 32, 34, 36 schiebt. Hat das flüssige Abformmaterial alle drei Anschlußstutzen 32, 34, 36 erreicht, so kann die auf die Stempel 96, 98 ausgeübte Kraft beendet werden. Die Speiseleitung 148 wird vom Anschlußstutzen 30 abgenommen, wodurch sich das in diesen integrierte Ventil 11 wieder schließt.

Nach Aushärten des Abformmateriales wird dann der Unterdruckregler 90 wieder auf die sperrende Ausgangsstellung zurückgestellt, und man kann nun den Löffel 1 vom Oberkiefer-Zahnbogen abheben.

Falls gewünscht, kann man die Unterdruckbeaufschlagung des Löffels auch schon nach dem vollständigen Ausfüllen des Abformraumes 52 beenden.

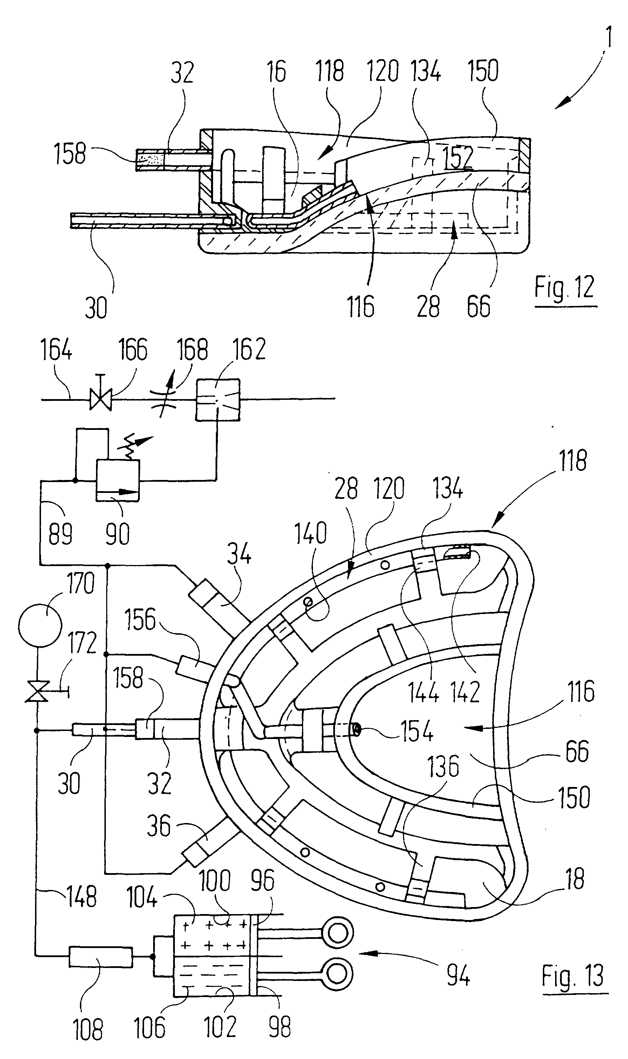

Das Ausführungsbeispiel nach den Figuren 12 und 13 der Zeichnung unterscheidet sich vom soeben beschriebenen Ausführungsbeispiel dadurch, daß die mittlere unter Abstand parallel zum Gaumensegel verlaufende Wand 66 des Löffels 1 eine zusätzliche Dichtwand 150 trägt, deren freier Rand dicht an das Gaumsegel anlegbar ist. Der unter Einsatzbedingungen durch die Dichtwand 150 und das Gaumensegel begrenzte Saugraum 152 steht über eine gesonderte Saugleitung 154 mit dem Unterdruckregler 90 in Verbindung. Auf diese Weise ist gewährleistet, daß der Löffel 1 auch dann noch unter starker Saugwirkung gegen den Oberkiefer des Patienten gedrückt wird, wenn der Abformraum 52 schon vollständig mit Abformmaterial ausgefüllt wurde, oder auch dann, wenn durch den Abformraum 52 flüssige, aerosolartige oder gasförmige Spülmedien oder Therapeutika geschickt werden.

Bei den Ausführungsbeispiel nach den Figuren 12 und 13 sind ferner an den Anschlußstutzen 32, 34, 36 zylindrische Filterelemente 156, 158, 160 angebracht, welche durch in sie etwa angesaugtes flüssiges Abformmaterial verstopft werden. Zur weiteren Verbesserung der Sperrwirkung können die eigentlichen Filterflächen der Filterelemente mit zusätzlichem Härter- oder Katalysatormaterial oder mit Inhibitorantagonisten versehen sein.

Ferner ist beim Ausführungsbeispiel nach den Figuren 12 und 13 anstelle einer Saugmaschine (Verdichter) eine Venturi-Düse 162 vorgesehen. Deren Unterdruckanschluß ist mit dem Unterdruckregler 90 verbunden, ihr Speiseeingang steht mit einer Druckluftleitung 164 über ein Schaltventil 166 sowie eine Drossel 168 in Verbindung. Auf diese Weise kann man den zum Betreiben des Löffels 1 notwendigen Unterdruck am Arbeitsplatz unter Verwendung von dort schon sowieso vorhandener Druckluft erzeugen und einstellen.

Schließlich gehört zu den in Figur 13 gezeigten Löffelversorgungseinheiten noch eine Spülfluidquelle 170, die über ein Schaltventil 172 mit der Speiseleitung 148 verbunden ist. Auf diese Weise kann bei noch nicht freigegebenen Stempeln 96, 98 der Speiseleitung 148 ein Spülfluid zugegeben werden, welches nach Aufsetzen und Festsaugen des Löffels 1 durch die Abformrinne 18 in die Anschlußstutzen 32, 34, 36 gesaugt wird. Das Spülfluid reinigt dabei den Zahnbogen und kann für den Abdruck schädliche Verunreinigungen so fernen. Bei dem Spülfluid kann es sich um eine Spülflüssigkeit oder um ein Spülgas oder um ein Aerosol handeln. In sämtlichen Fällen kann das Spülfluid Wirkstoffe umfassen, welche die Zahnoberflächen und/oder das Zahnfleisch im Hinblick auf ein günstiges späteres Abformen vorteilhaft beeinflussen. So kann z.B. das Spülfluid blutungsstillende oder die Speichelbildung bzw. den Speichelfluß herabsetzende Wirkstoffe enthalten.

Es versteht sich, daß bei einer praktischen Ausführungsform mehrere Spülfluidquellen vorgesehen sein können, die jeweils über ein zugeordnetes Schaltventil mit der Speiseleitung 148 verbunden sind, analog wie für die Spülfluidquelle 170 oben beschrieben. Diese Spülfluidquellen können unterschiedliche Behandlungsmaterialien oder Kombinationen derselben enthalten, wie sie in der Beschreibungseinleitung unter 4. aufgeführt sind. Insbesondere kann ein derartiges Spülfluid ein Netzmittel enthalten, das vor Abdrucknahme Anwendung findet.

Anstelle einer Spülfluidquelle kann man an die Speiseleitung 148 auch eine Warmluftquelle anschließen, um die Zahnoberflächen und Gewebeoberflächen zu trocknen, wobei die Lufttemperatur beispielsweise zwischen 37 und 50°C liegen kann.

Es versteht sich, daß bei einer anderen praktischen Ausführungsform auch ausschließlich Spülfluidquellen an den Abformlöffel angeschlossen sein können und keine Abformmaterial-Speiseleitungen oder Abformmaterial-Speiseeinrichtungen verwendet werden. Auch kann der Abformlöffel ohne Zusammenhang mit einer Abformung in Behandlungssituationen zur Darreichung von Therapeutika verwendet werden, wie sie in der Beschreibungseinleitung im Punkt 4. angesprochen sind.

Nach Beendigung der Spülphase wird der in den Figuren 12 und 13 gezeigte Löffel ähnlich verwendet, wie oben stehend unter Bezugnahme auf die Figuren 8 bis 11 beschrieben.

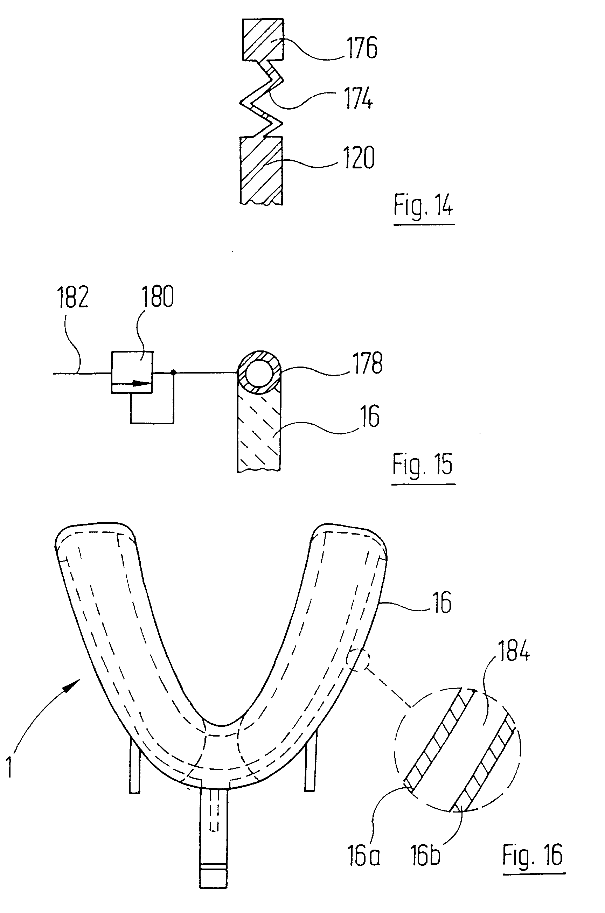

Um eine gute Anpassung des freien Randes des Löffelrandteiles 118 an die im Mund eines Patienten vorgefundene Geometrie zu erhalten, kann man den randnahen Abschnitt der Randwand 16 balgähnlich ausbilden, wie in Figur 14 bei 174 gezeigt. Der Balgabschnitt 174 kann dann eine weiche angeformte oder aufgesetzte Dichtung 176 tragen.

Gemäß Figur 15 kann man auf dem freien Rand der Randwand 16 auch eine schlauchförmige Dichtung 178 vorsehen, die elastisch verformbar ist.

In Abwandlung des Ausführungsbeispieles nach Figur 15 kann man die Dichtung 178 auch als flexiblen Schlauch ausbilden und über einen Druckregler 180 mit einer Druckluftleitung 182 verbinden, wie in Figur 15 zusätzlich dargestellt ist.

Schließlich kann man gemäß Figur 16 die Randwand 16 auch als Doppelwand ausbilden, die aus Einzelwänden 16a und 16b besteht. Der zwischen den Einzelwänden 16a und16b liegende Raum 184 wird dann am einen Ende des Löffels mit einer Kühlwasser-Speiseleitung und am anderen Ende mit einer Kühlwasser-Rückführleitung verbunden. Auf diese Weise kann man im Löffel auch vorgewärmte (temperierte) Abformmaterialien verwenden, die unter definierter Abkühlung erhärten.

Für die Zwecke der vorliegenden Erfindung gut geeignete Abformmaterialien sind insbesondere Silikone, z.B. Polysiloxane oder Polyether jeweils mit zugehörigen Härter-, Inhibitor- oder Katalysatormaterialien. Selbstverständlich können jedoch auch andere beliebige Abformmaterialen, wie z.B. Abdruckgips oder Alginate, etc. vorteilhaft verwendet werden.

In Verbindung mit der doppelwandigen Löffelform können auch Hydrokolloid-Abformmaterialien vewendet werden.

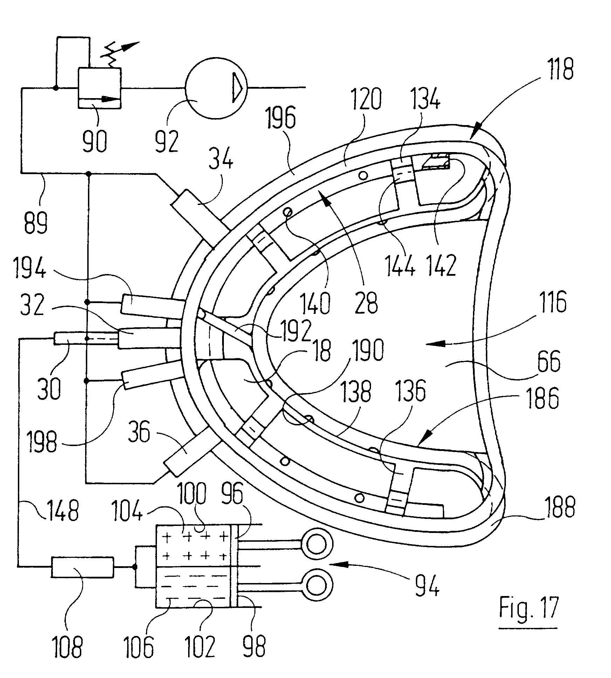

Bei dem Ausführungsbeispiel nach Figur 17 ist zusätzlich zum Abformmaterial-Verteilrohr 28 ein Vakuum-Verteilrohr 186 vorgesehen, welches ebenfalls an den Unterdruckregler 90 angeschlossen ist. Das Verteilrohr 186 hat hintere Anschlußenden 188 sowie in seiner Wand ausgebildete Ansaugöffnungen 190. Die Ansaugöffnungen 190 liegen den Austrittsöffnungen 140 gegenüber. Der mittlere Abschnitt des Vakuumverteilrohres 186 ist über eine Leitung 192 mit einem weiteren Vakuum-Anschlußstutzen 194 verbunden, der an die gemeinsame Unterdruckleitung 89 angeschlossen ist. Ähnlich sind die Anschlußenden 188 des Vakuum-Verteilrohres 186 an eine Leitung 196 angeschlossen, die mit einem weiteren Vakuum-Anschlußstutzen 198 in Verbindung steht. Letzterer ist wiederum an die gemeinsame Unterdruckleitung 89 angeschlossen.

Das Abformmaterial-Verteilrohr 28 und das Vakuum-Verteilrohr 186 können in einer gemeinsamen Ebene liegen, welche z.B. in Höhe des Zahnhalses verläuft, sie können aber auch in unterschiedlicher Höhe angeordnet sein, wobei eines der Verteilrohre in Höhe des Zahnhalses, das andere der Verteilrohre auf Höhe der mittleren Höckerspitzen bzw. der Kauflächen oder Inzisalkanten liegt, so daß sich in zur Längserstreckung des Abformraumes senkrechter Schnittebene gesehen ein schräg ansteigender oder schräg abfallender Fließweg des Abformmateriales ergibt.

Im einzelnen können die Austrittsöffnungen 140 und Ansaugöffnungen 190 jeweils einer Zahnposition oder einer Mehrzahl von Zahnpositionen zugeordnet sein.

Es versteht sich, daß man in Abwandlung des Ausführungsbeispieles nach Figur 17 die Lage von Abformmaterial-Verteilrohr 28 und von Vakuum-Verteilrohr 186 vertauschen kann. Das Abformmaterial fließt dann radial von innen nach außen statt wie beim Ausführungsbeispiel nach Figur 17 von außen nach innen. Dies zeigt, daß man Zufuhr und Abfuhr bezüglich der Lage vertauschen kann.

Die Lage der Austrittsöffnungen 140 und der Ansaugöffnungen 190 kann auch so gewählt werden, daß sie mit interdentalen Räumen fluchten. Auch kann man den Anstellwinkel der Achsen der Austrittsöffnungen 140 und der Ansaugöffnungen 190 ändern, z.B. schräg nach oben zur Zahnreihe hin ansteigend wählen.

Um gleichzeitig einen Materialfluß von hinten nach vorne überlagern zu können und evt. auf die Vakuum-Anschlußstutzen 32, 34, 36 verzichten zu können, kann man die Austrittsöffnungen 140 und die Ansaugöffnungen 190 mit von hinten nach vorne zunehmendem Durchmesser gestalten. In Abwandlung hiervon kann man auch den zentralen Vakuum-Anschlußstutzen 32 beibehalten, um bis ans Ende des Füllens des Abformraumes ein Vakuum im Abformraum aufrechtzuerhalten und aus diesem Flüssigkeiten abzusaugen.

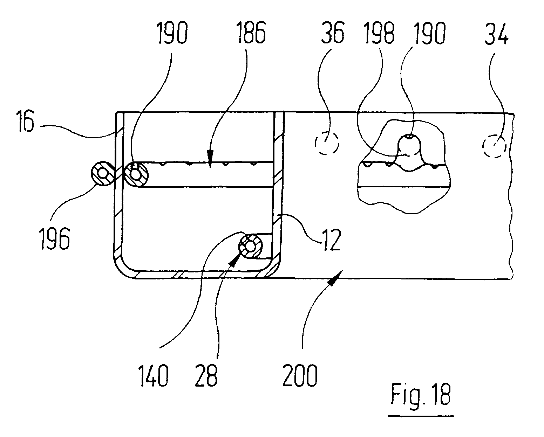

Beim Ausführungsbeispiel nach Figur 18 ist ein einstückiges Löffelhauptteil 200 aus etwas biegsamem transparentem Kunststoff vorgesehen, welches in Aufsicht gesehen im wesentlichen U- oder V-förmig ist und im wesentlichen rechteckig U-förmigen transversalen Querschnitt hat.

Die außenliegende Randwand 16 trägt dicht angeclipst das Vakuumverteilrohr 186 (inklusive Anschlußende 188, Leitung 182 sowie Anschlußelemente 194 und 198). Die innenliegende Randwand 12 trägt dicht angeclipst das Abformmaterial-Verteilrohr 28 (inklusive Anschlußelement 30). Auf diese Weise können die schlecht zu reinigenden vom Abformmaterial durchströmten oder erreichten Rohre zusammen mit dem Abdruck leicht vom Löffelhauptteil 200 getrennt werden.

Das Vakuum-Verteilrohr 28 ist in der Nachbarschaft des Bodens der Abformrinne angeordnet, das Vakuum-Verteilrohr 186 in Höhe des Zahnhalses. Die Vakuum-Ansaugöffnungen 190 weisen nach oben, die Abformmaterial-Austrittsöffnungen 140 schräg nach oben. Auf diese Weise erhält man eine Füllung des Abformraumes mit Abformmaterial, bei welcher sich die Front des letzteren zum einen von hinten nach vorne, zum anderen von unten nach oben und gleichzeitig von innen nach außen bewegt.

Die Größe und/oder der Abstand der Abformmaterial-Austrittsöffnungen 140 und/oder der Vakuum-Ansaugöffnungen 190 kann sich in Längsrichtung der Verteilrohrrohre ändern, um eine gesteuerte Zufuhr des Abformmateriales zu ermöglichen, insbesondere die Front des Abformmateriales so zu führen, daß sie auf eine bis zuletzt offenbleibende Vakuum-Ansaugöffnung oder ein ggf. vorgesehenes bis zu letzt offenbleibendes Vakuum-Anschlußelement zuläuft. Bei der oben beschriebenen Geometrie kann hierzu der Durchmesser unter gleichem Abstand angeordneter Abformmaterial-Austrittsöffnungen und Vakuum-Ansaugöffnungen von hinten nach vorne abnehmen.

Beim Ausführungsbeispieles nach Figur 18 konnten die Vakuumanschlußelemente 32, 34, 46 entfallen, da das Vakuum-Verteilrohr 186 bis in den vorderen Abschnitt mit Ansaugöffnungen 190 versehen ist.

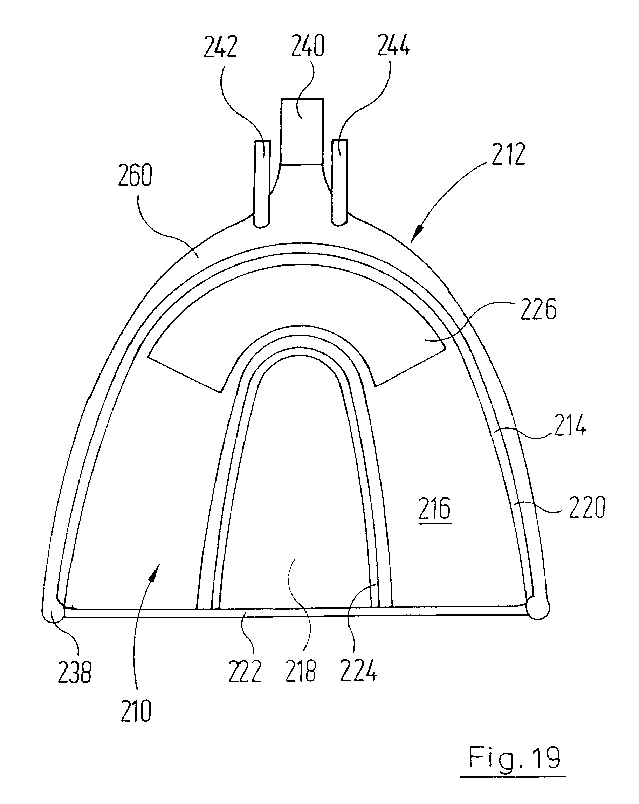

Der in den Figuren 19 bis 23 wiedergegebene Abformlöffel besteht aus einem Löffelgrundteil 210 und einem auf dieses aufgeklipsten Verteilerteil 212. Das Löffelgrundteil ist aus Metall gefertigt und entspricht im wesentlichen einem bekannten Abformlöffel, der bei der klassischen Abformtechnik üblicherweise vom Zahnarzt mit etwa knetähnlichem Abformmaterial gefüllt wird und dann auf einen abzuformenden Oberkiefer aufgesetzt wird. Das Verteilerteil 212 ist ein Kunststoff-Formteil.

Das Löffelgrundteil 210 hat eine gebogene Außenwand 214 und eine Bodenwand 216. Von der Bodenwand 216 ist ein Wandabschnitt 218 in Richtung auf das Gaumensegel des Patienten zu hochgedrückt.

Die obere Kante der Außenwand 214 trägt einen Wulst 220, der z.B. ein angelöteter Draht sein kann. Ähnlich ist ein Wulst 222 an der Hinterkante des Löffelgrundteiles 210 vorgesehen. Auf den Wandabschnitt 218 ist ein Draht 224 aufgelötet, der dem Rand des Wandabschnittes 218 parallel folgt. Er dient dazu, Hinterschneidungen vorzugeben, mit welchen sich das Abformmaterial nach dem Erstarren verhakt.

Zusätzlich zu diesen bekannten Merkmalen weist das Löffelgrundteil 210 zumindest im anterioren Abschnitt der Bodenwand 216 ein transparentes Fenster 226 auf.

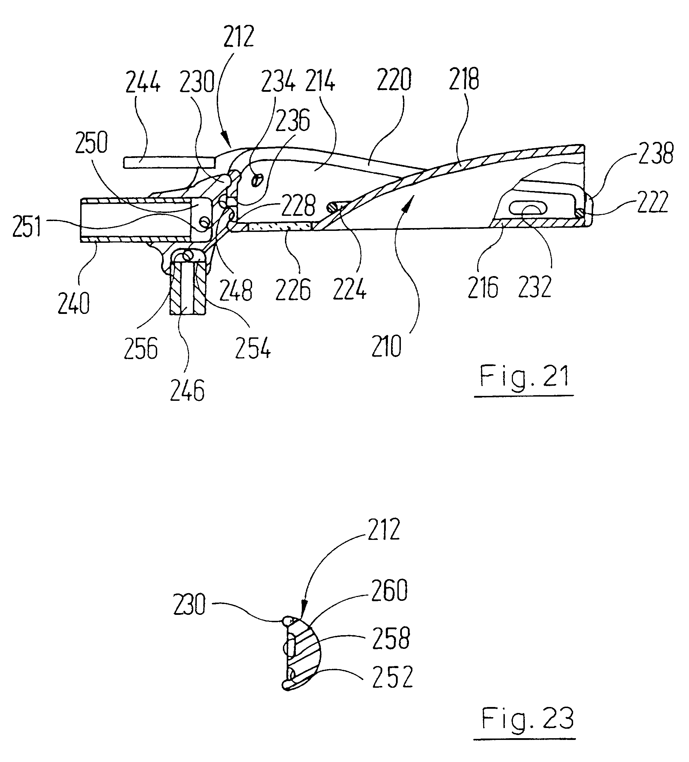

Auf der Außenseite der Außenwand 214 sind (vgl. Figur 21) Positioniernuten 228 eingeformt. Diese arbeiten mit komplementären Positionierrippen 230 zusammen, welche auf der Innenfläche des Verteilerteiles 212 vorgesehen sind.

In den beiden Schenkeln der Außenwand 214 sind im distalen Endabschnitt zwei Abformmaterial-Speiseöffnungen 232 vorgesehen. Im anterioren Endabschnitt hat die Aussenwand 214 zwei seitliche Vakuum-Speiseöffnungen 234 sowie eine zentrale Vakuum-Speiseöffnung 236.

Die Innenfläche des Verteilerteiles 212 ist exakt komplementär zur Außenfläche der Außenwand 214, so daß das Verteilerteil 212 spielfrei und dicht auf dem Löffelgrundteil 210 sitzt. Durch die Positioniernuten 228 und die Positionierrippen 230 ist die Lagebeziehung zwischen Löffelgrundteil 210 und Verteilerteil 212 eindeutig vorgegeben. Das Verteilerteil 212 hat an den distalen Enden seiner beiden Schenkel jeweils einen Rastabschnitt 238, der das benachbarte hintere Ende der Außenwand 214 im Schnappsitz übergreift.

Der anteriore Endabschnitt des Verteilerteiles 212 trägt einen mittigen Abformmaterial-Anschlußstutzen 240, der nach vorn vorsteht, zwei symmetrisch zur Mittelebene angeordnete, ebenfalls nach vorn überstehende Vakuum-Anschlußstutzen 242, 244 und einen nach unten verlaufenden strömungsmäßig von den Vakkum-Anschlußstutzen 242, 244 getrennten weiteren Vakuum-Anschlußstutzen 246.

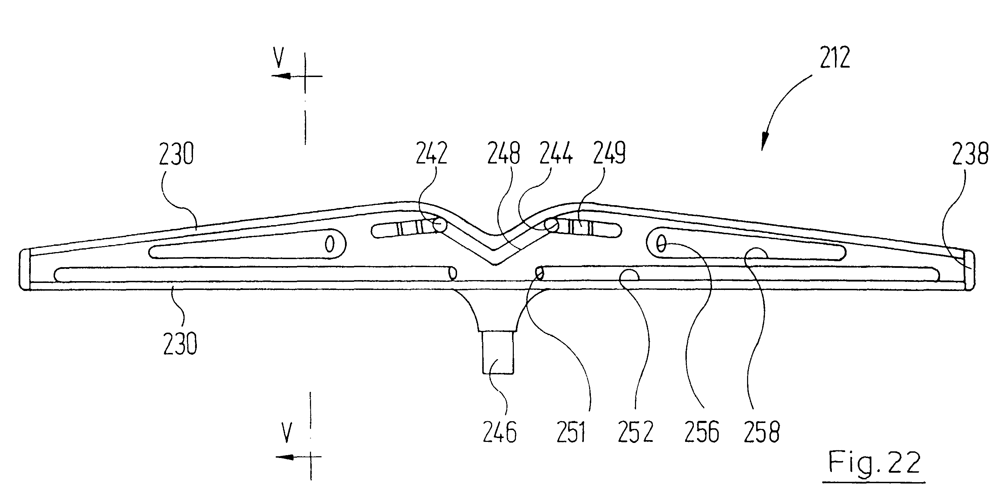

Wie aus Figur 22 ersichtlich, stehen die Vakuum-Anschlußstutzen 242, 244 mit einer Verteilernut 248 in Verbindung, die einen mittleren, V-förmigen Nutabschnitt und zwei seitliche, leicht abfallende Nutabschnitte aufweist.
Die tiefste Stelle des mittleren Nutabschnittes fluchtet mit der zentralen Vakuum-Speiseöffnung 236, die seitlichen, äußeren Abschnitte der Verteilernut 248 stellen eine Strömungsmittelverbindung zu den Vakuum-Speiseöffnungen 234 her.

In demjenigen Bereich der Verteilernut 248, welcher zwischen dem Vakuum-Anschlußstutzen 242 bzw. 244 und der benachbarten Vakuum-Speiseöffnung 234 liegt, ist ein Steg 249 über die gesamte Nutbreite soweit und mit solcher Länge hochgezogen, daß zwischen dem Stegrücken und der Außenfläche des Löffelgrundteils 210 nur ein schmaler Spalt verbleibt. Dieser ist im einzelnen so bemessen, daß einerseits noch eine ausreichende Vakuumbeaufschlagung der Vakuum-Speiseöffnungen 234 gewährleistet ist, andererseits aber gegen Ende des Füllens des Abformraumes angesaugtes flüssiges Abformmaterial an dem Steg 249 wegen der nur geringen Dicke des verbleibenden Spaltes nicht vorbeifließen kann.

Der Steg 249 stellt somit eine für Vakuum durchlässige Sperre für das Abformmaterial dar, und auf diese Weise ist gewährleistet, daß die Vakuum-Speiseöffnung 236 bis zum Ende des Füllens des Abformraumes mit Unterdruck beaufschlagt ist. Ferner ist so gewährleistet, daß das flüssige Abformmaterial nicht in die Vakuum-Anschlußstutzen 242, 244 gelangt, die nach einem Aushärten des Abformmateriales allenfalls mit unverhältnismäßig großem Aufwand wieder zu reinigen wären. Aus der offenen Verteilernut 248 kann aber erstarrtes Abformmaterial leicht wieder entfernt werden.

Falls gewünscht, kann man ähnliche Abformmaterial-Sperren in denjenigen Abschnitten der Verteilernut 248 vorsehen, welche sich zwischen Vakuum-Anschlußstutzen 242, 244 und der Vakuum-Speiseöffnung 236 erstrecken.

Das Realisieren der Abformmaterial-Sperre in der Verteilernut 248 durch hochgezogene Stege auf dem Boden der Verteilernut ist im Hinblick auf besonders einfache Herstellung des Verteilerteiles 212 von Vorteil. Es versteht sich, daß man die gleiche Wirkung durch Einsetzen offenporiger Sperrelemente in die Verteilernut 248 erzielen kann.

Der Abformmaterial-Anschlußstutzen 240 steht mit einem Verteilerraum 250 in Verbindung, von welchem Verteilerkanäle 251 ausgehen, wie Figur 21 zeigt. Die Verteilerkanäle 251 münden in Verteilernuten 252, die in der Stirnfläche des Verteilerteiles 212 symmetrisch zur Mittelebene angeordnet sind und zum distalen Ende der Stirnfläche des Verteilerteiles 212 laufen, um eine Strömungsmittelverbindung zu den dort gelegenen Abformmaterial-Speiseöffnungen 232 herzustellen.

Der weitere Vakuum-Anschlußstutzen 246 steht mit einem Verteilerraum 254 in Verbindung, welcher über symmetrisch angeordnete Verteilerkanäle 256 mit ebenfalls symmetrisch zu beiden Seiten der Mittelebene des Verteilerteiles 212 vorgesehenen Saugtaschen 258 in Verbindung steht, die als Vertiefungen in der Stirnfläche des Verteilerteiles 212 ausgebildet sind.

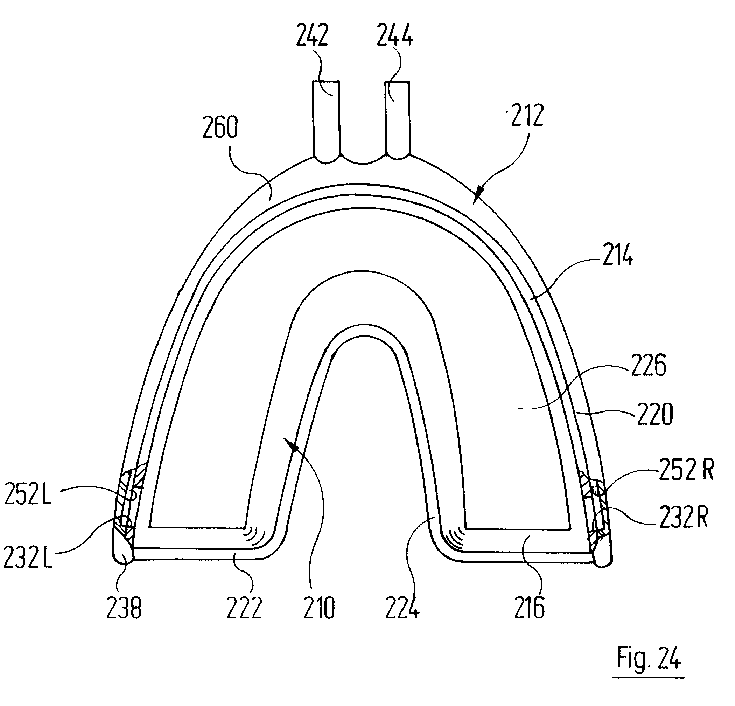

Wie aus Figur 23 ersichtlich, hat die Außenfläche 260 des Verteilerteiles 212 ballige Form, so daß sich Weichgewebe schonend flächig darüberlegen kann.

Der Abformlöffel ist in anterior-distaler Richtung in der Regel etwas länger gewählt als ein klassischer Abformlöffel. An der distalen Kante ist er schräg nach oben zum Gaumen zugewandt ballig ausgeführt. Dies ist deshalb möglich, weil bei dem hier beschriebenen Abformverfahren kein Abformmaterial über die distale Kante in den Rachenraum des Patienten gelangen kann und dort möglicherweise Würgereize verursacht.

Dies hat auch den Vorteil, daß das distale Ende im Bereich des weichen Gaumens lokalisiert ist, welcher die Abdichtung begünstigend sehr resilient ist und insbesondere schräg nach unten bewegt werden kann (beim Versuch des Blasens durch die zugehaltene Nase) und sich so an die distale Kante des Abformlöffels unter Vakuumbeaufschlagung desselben anschmiegt, wodurch die Abdichtung beim hinteren Endes Abformlöffels erhalten wird.

Nachstehend wird das Arbeiten mit dem oben beschriebenen Abformlöffel näher beschrieben, wobei angenommen wird, daß das Löffelgrundteil 210 ein aus Metall gefertigtes mehrfach verwendetes Teil ist, während das Verteilerteil 212 ein Kunststoff-Wegwerfteil ist, in welches die verschiedenen Anschlußstutzen eingespritzt bzw. eingegossen sind.

Das Verteilerteil 212 kann wenigstens auf seiner Innenseite aus weichbleibendem Kunststoff hergestellt sein, z.B. aus Silikon. In dieses Kunststoffteil sind die Anschlußstutzen eingespritzt oder eingegossen, die ihrerseits aus Metall oder hartem Kunststoff gefertigt sein können.

Falls gewünscht, kann man in das Verteilerteil 212 noch ein Metall- oder Hartkunststoffteil einlegen, welches bügelähnliche Gestalt hat und dazu dient, ein aus weichem Kunststoffmaterial hergestelltes Verteilerteil 212 mechanisch zu stabilisieren und auch in diesem Falle ein Aufclipsen des Verteilerteiles auf das Löffelgrundteil 210 zu erlauben, wobei die Clipsfunktion der eingebettete Bügel übernimmt.

Ein neues Verteilerteil 212 wird auf ein sterilisiertes Löffelgrundteil 210 aufgeclipst. Der Vakuum-Anschlußstutzen 246 wird mit Vakuum beaufschlagt. Durch Unterdruckbeaufschlagen der Saugtaschen 258 ist nun ein festes Zusammenhalten von Löffelgrundteil und Verteilerteil 212 gewährleistet.

Auf die hintere Kante des Löffelgrundteiles wird ein 3-5 mm dicker Strang aus Silikon-Dichtmasse aufgelegt.

Die Silikon-Dichtmasse ist vorzugsweise ein Silikonknet (knetähnliche Konsistenz), welcher einphasig nicht erhärtend und unter Mundtemperatur und unter dem beim Einbringen des Abformlöffels in den Mund ausgeübten Druck verformbar ist. Dieser Silikonknet legt sich somit zähplastisch zwischen den Abformlöffel und Zähne sowie Weichgewebe, so daß man eine gute Dichtstelle erhält. Vorzugsweise ist die Silikon-Dichtmasse so gewählt, daß sie sich mit dem Abformmaterial verbindet. Auf diese Weise können keine schwer zu desinfizierenden Spalträume entstehen.

Nochmals alternativ können die gesamten Löffelränder oder auch nur die Außenfläche des Verteilerteiles durch Aufbau mit einer plastischen und erhärtbaren Masse (z.B. Silikon oder thermoplastischem Kunststoff) vor Abdrucknahme individuell angepaßt werden.

Es versteht sich, daß man an unterschiedlichen Abschnitten des Abformlöffels auch unterschiedliche der oben geschilderten Dichtmaßnahmen verwenden kann.

Die durch eine verformbare Masse bewerkstelligte Abdichtung erstreckt sich im Oberkiefer insbesondere auf den Bereich des Gaumengewölbes, um dadurch eine Rinne zwischen der Dichtmasse und der labialen Löffelwand zu erhalten. Dies verbessert den gerichteten Fluß des Abformmateriales. Im Unterkiefer erstreckt sich der ggf. unter zusätzlicher Verwendung von Dichtmittel abzudichtende Bereich auf das retromolare Dreieck distal der am weitesten dorsal gelegenen Backenzähne in der direkten Umgebung des Kieferkamms.

Bei einer bevorzugten Ausführungsform eines Abformlöffels ist der Abformformmaterial-Anschlußstutzen zunächst mit einem wiederverwendbaren Ventil oder einem Einmal-Ventil geschlossen, z.B. durch eine Folie versiegelt.

Dies ermöglicht eine Positionierung und Fixierung des Abformlöffels unter Vakuumbeaufschlagung sowie eine Einstellung des Vakuums auf einen Wert, bei dem sich die Zahnfleischpapillen leicht vom Zahn abheben und die Sulci zirkulär wenigstens um die abzuformenden Zähne leicht abheben. Um ein solches Abheben zu erleichtern können vorher in die Sulci einer oder mehrere Bindefäden eingebracht werden, die während des Abformens verbleiben oder vorher entfernt werden.

Erst wenn optimale Bedingungen für das Abformen vorliegen, z.B. stärkere Blutungen unter Sichtkontrolle zum Stillstand gekommen sind, wird die Abformmaterial-Quelle an den Abformmaterial-Anschlußstutzen angeschlossen, z.B. an eine Mischkammer einer Doppelspritze für die Binderkomponente und die Härterkomponente des Abformmateriales. Dabei wird zunächst im Anschlußbereich eine Dichtstelle geschaffen, bevor das beim Abformmaterial-Anschlußstutzen vorgesehene Ventil bzw. die Dichtmembran geöffnet wird. Dies hat den Vorteil, daß das zuvor eingestellte Vakuum nicht mehr verändert wird und der sichere Sitz des Löffels unverändert erhalten bleibt.

Alternativ kann das Abformmaterial z.B. nach Aktivierung (durch Drücken einer Nahtdichtstelle) eines flexiblen Doppelbeutels durch intensives Kneten oder mechanischen Rollen desselben oder auf andere Weise vorgemischt werden und in gemischtem Zustand durch manuelles Ausdrücken von Hand oder motorisch dem Abformmaterial-Anschlußstutzen zugeleitet werden.

Um zu verhindern, daß sich der Löffel lockert, wenn die Doppelspritze beim Betätigen bewegt wird oder sich der Patient bewegt, wird die Doppelspritze über eine flexible Schlauchverbindung mit dem Abformaterial-Anschlußstutzen verbunden.

Beim Einbringen des Abformlöffels in den Mund des Patienten wurde der Dichtmassenstrang gemäß dem Verlauf des Gaumensegels des Patienten verformt.

Das dem Oberkiefer benachbarte Weichgewebe legt sich unter Spannung über die Außenfläche des Verteilerteiles 12 und bildet so dort eine flächige Dichtstelle. Kommt es beim Herstellen eines Abdruckes auf eine genaue Abformung einzelner Bereiche nicht an, so können auf die der Okklusalfläche der Zähne gegenüberliegende Löffelwand sogenannte Stops aus verformbarer weichbleibender und/oder erhärtender Masse, z.B. aus thermoplastischem Kunststoff oder Wachs aufgebracht werden. Derartige Stops dienen einem noch sichereren Sitz des Abformlöffels unter Vakuumbeaufschlagung.

Der durch den Kiefer des Patienten und den Abformlöffel begrenzte Abformraum ist, wie wie oben dargelegt, durch Vakuumbeaufschlagung der Vakuum-Anschlußstutzen 242, 244 evakuiert. Auf diese Weise wird der Abformlöffel unverrückbar auf dem Kiefer des Patienten positioniert. Gleichzeitig wird aus dem Mund des Patienten im Abformraum befindliche Flüssigkeit abgesaugt. Durch die Unterdruckbeaufschlagung werden auch die Ränder des Zahnfleisches etwas von den Zähnen abgehoben. Gegebenenfalls muß zu diesem Absaugen der Abformraum via Abformaterial-Anschlußstutzen und Abformmaterial-Speiseöffnung etwas belüftet werden.

Wird nun dem Abformmaterial-Anschlußstutzen 240 flüssiges Abformmaterial zugeführt, so fließt dies über den Verteilerraum 250, die Verteilerkanäle 251 und die Verteilernuten 252 zu den Abformmaterial-Speiseöffnungen 232 und tritt durch diese ins hintere Ende des Abformraumes ein. Die Front des flüssigen Abformmateriales schiebt im Abformraum angefundene Flüssigkeiten vor sich her und in Richtung auf die Vakuum-Speiseöffnungen 334 und 336. Das Abformmaterial strömt längs der Zahnreihe im Abformmaterial von hinten nach vorne und bildet die Zähne sauber ab, wobei es wegen des Abhebens der Zahnfleischsäume auch die dort gelegenen Abschnitte der Zähne sauber abbildet.

Das Sichfüllen des Abformraumes mit Abformmaterial kann durch den Zahnarzt durch das Fenster 226 hindurch kontrolliert werden. Sind die Vakuum-Anschlußstutzen 242 und 244 mit Abformmaterial gefüllt, kann die Zufuhr von Abformmaterial beendet werden. Nach Aushärten des Abformmateriales wird dann der Abformlöffel vom Kiefer abgenommen.

Nach Aushärten des Abformmateriales wird das Verteilerteil 212 vom Löffelgrundteil 210 abgehoben und weggeworfen. Alternativ kann das Verteilerteil 212 auch gesäubert, desinfiziert, sterilisiert und wiederverwendet werden.

Das Löffelgrundteil kann nach Abnehmen des Abdruckes gereinigt, sterilisiert und wiederverwendet werden.

Zur Vakuumbeaufschlagung der Vakuum-Anschlußstutzen 242, 244 sowie des hiervon strömungsmäßig unabhängigen Vakuum-Anschlußstutzens 246 kann eine sowieso vorhandene Vakuumquelle oder eine extra hierfür vorgesehene, mit Druckluft betriebene Venturidüse verwendet werden.

Die Erfindung wurde obenstehend anhand eine Abformlöffels für den Oberkiefer beschrieben; es versteht sich, daß sie unter entsprechender Abwandlung auch für Unterkiefer-Abformlöffel verwendet werden kann.

Selbstverständlich kann ein derartiger Abformlöffel auch nur für Abformungen von Teilen des Kiefers, z.B. einer Kieferhälfte oder von Kiefersegmenten verwendet werden. Soll nur eine Kieferhälfte abgeformt werden, so wird die Abformmaterial-Speiseöffnung des Löffelgrundteiles etwa durch einen passenden konfektionierten Stopfen oder eine plastische oder zunächst plastische und anschließende erhärtende Substanz oder alternativ die Abformmaterial-Verteilernut des Löffelverteilerteiles der entsprechenden nicht zur Abformung vorgesehenen Seite verschlossen. Alternativ können nicht zur Abformung vorgesehene Bereiche durch vorheriges Einbringen und Positionieren von vorzugsweise plastisch verformbaren Totraumkörpern wie etwa Schaumstoff, Knetmasse, Wattebäusche, etc. an der entsprechenden Stelle vor Justierung und Befüllen des Löffels von der Abformung ausgeschlossen werden, was im wesentlichen in einer Materialeinsparung resultiert.

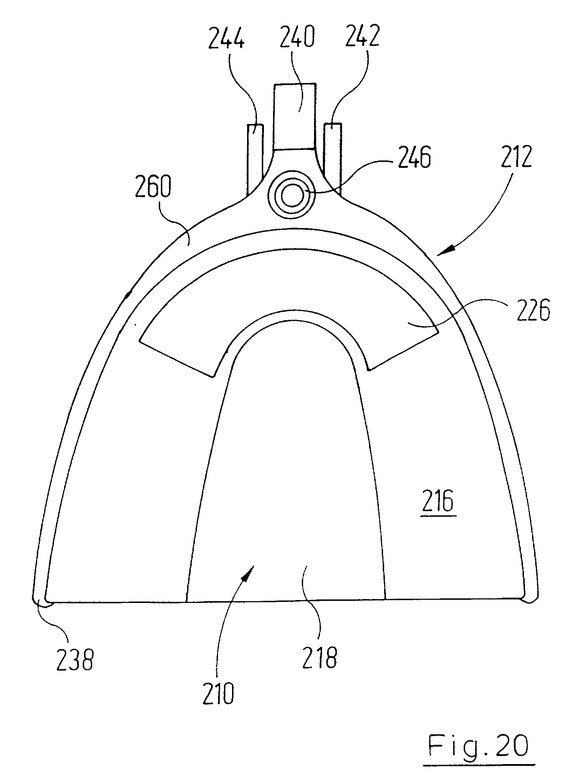

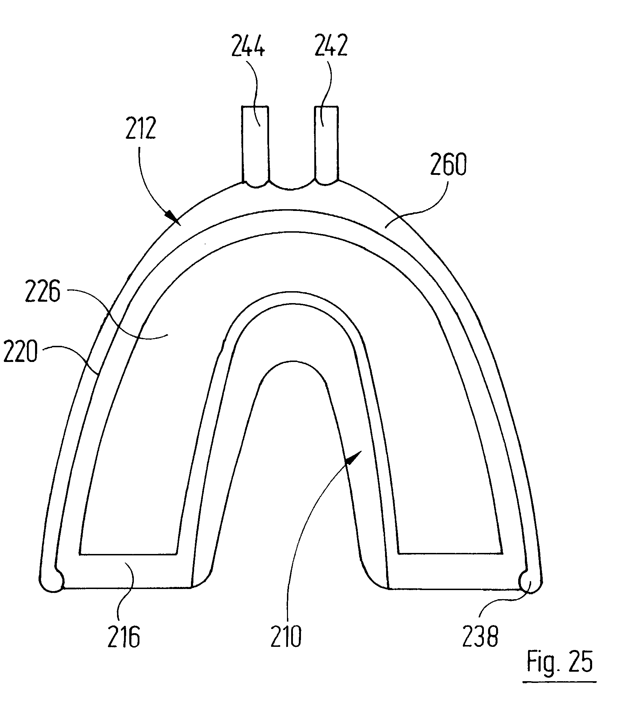

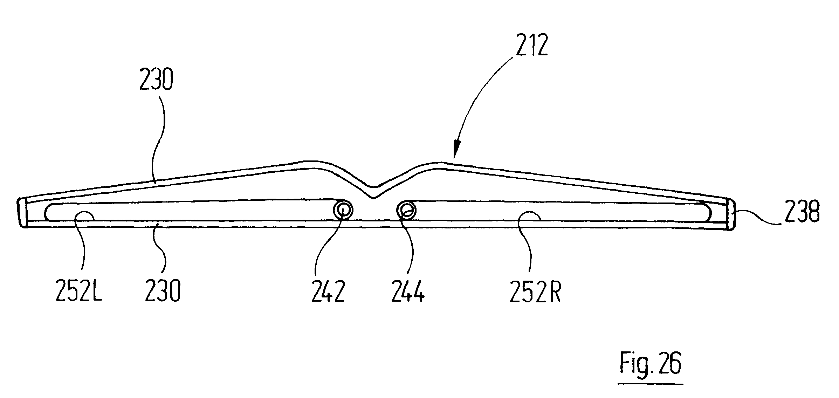

Der Löffel, der in den Figuren 24 bis 26 gezeigt ist, ist vom zweiteiligen Grundaufbau her gesehen sehr ähnlich zu dem in den Figuren 19 und 20 gezeigten Löffel. Funktionell schon beschriebenen Bastandteilen entsprechende Bestandteile sind wieder (wie generell in der Figurenbeschreibung) mit denselben Bezugszeichen versehen und werden nicht nochmals detailliert beschrieben. Wo eine Unterscheidung zwischen zu beiden Seiten der Symmterieebene liegenden Bestandteilen gemacht werden soll, erfolgt dies durch Anhängen von "R" (für rechts) bzw. "L" (für links).

Der in Figur 24 gezeigte Löffel ist zum Herstellen von Abdrücken vom Unterkiefer eines Patienten bestimmt und sein Fenster 226 erstreckt sich über die gesamte Bodenwand 216 des Löffelgrundteiles 210.

Das Verteilteil 212 trägt nur zwei Anschlußstutzen 242, 244, die je nach Anwendung als Vakuumanschlußstutzen oder Abformmaterial-Anschlußstutzen dienen können.

Wird im Einsatz z.B. der Anschlußstutzen 244 mit der Vakuumquelle verbunden und der Anschlußstutzen 242 mit der Abformmaterialquelle verbunden, so füllt sich der Löffel in Figur 24 von links unten nach oben und dann nach rechts unten. Das Fortschreiten der Front des Abformmateriales kann durch das Fenster 226 gut beobachtet werden. Man kann das Füllen des Formraumes unter visueller Kontrolle zu jedem Zeitpunkt beenden, wenn ein interessierender Teil des Kiefers von Abformmaterial umgeben ist. Der Löffel nach den Figuren 24 bis 26 eignet sich somit besonders gut zur Herstellung von Teilabdrücken.

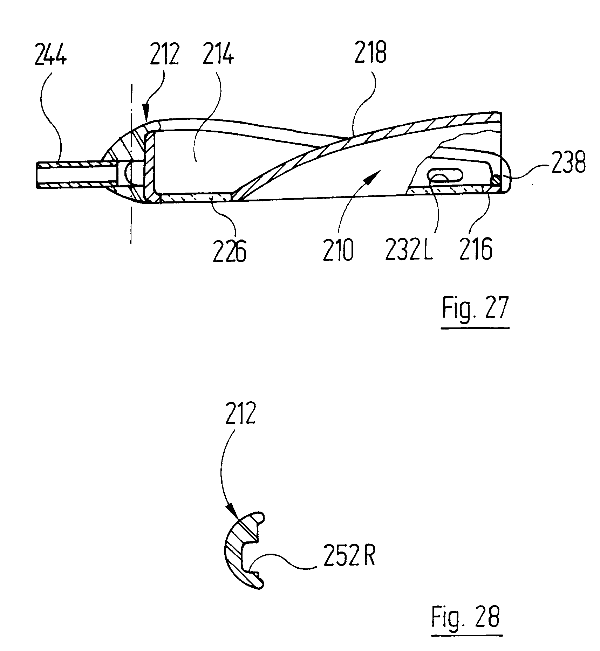

Die Figur 27 zeigt einen entsprechenden Löffel, der zur Verwendung am Oberkiefer bestimmt ist.

Figur 28 zeigt einen transversalen Schnitt durch einen der Schenkel des Verteilteiles 212.

Die oben im einzelnen beschriebenen Löffel können statt zum Herstellen von Kieferabdrücken auch zum Herstellen von Negativen von Zahnmodellen hergestellt werden, die ihrerseits durch Abgießen von Kieferabdrücken hergestellt wurden. Die Löffel werden dann zusammen mit einer Unterform verwendet, auf welcher ein Zahnmodell positioniert wird und die zusätzlich die Funktion der im Mund angefundenen Weichgewebe simuliert, um zusammen mit dem Löffel einen dichten Formraum zu begrenzen.

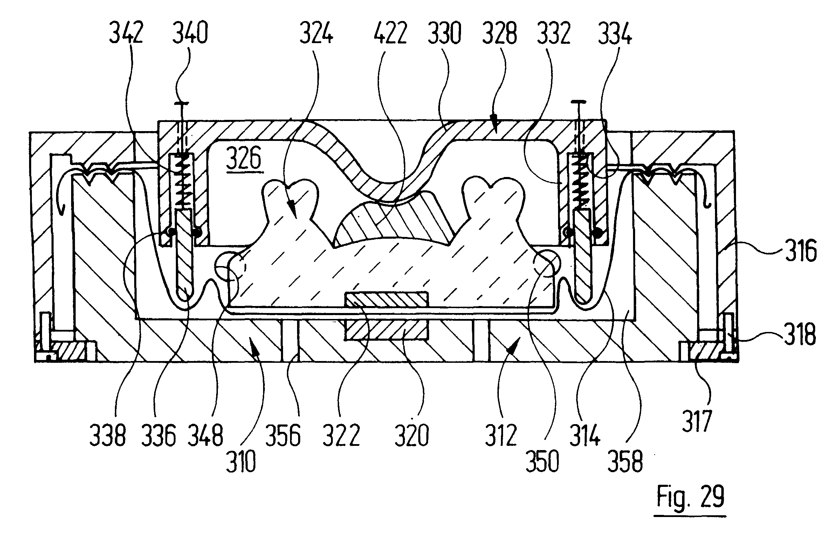

Eine entsprechende Unterform ist in Figur 29 insgesamt mit 310 bezeichnet. Sie hat ein becherförmiges nach oben offenes Gehäuse 312, an deren oberem Rand eine elastische Formraummembran 314 festgelegt ist. Diese verläuft in unbelastetem Zustand im wesentlichen horizontal über das Gehäuse 312.

Der Rand der Formmembran 314 ist mit der Stirnfläche der Umfangswand des Gehäusese 312 durch einen zylindrischen Klemmrahmen 316 verbunden. Am unteren Ende desselben befindet sich ein Klemmring 317. Zum Verspannen des Klemmringes 317 und des Klemmrahmens 316 mit dem Gehäuse 312 dienen Spannschrauben 318, die in am unteren Ende des Klemmrahmens vorgesehenen Gewindebohrungen laufen und deren Köpfe am Klemmring 317 angreifen.

Im Boden des Gehäuses 312 ist ein Magnet 320 eingelassen. Dieser arbeitet mit einem Magneten 322 (oder einer Platte aus magnetischem Material wie Eisen) zusammen, der in die Unterseite eines Zahnmodelles 324 eingegossen ist. Das Zahnmodell 324 ist auf übliche Weise durch Ausgießen eines Zahnabdruckes z.B. mit Gips hergestellt.

Setzt man auf die Formraummembran 314 einen Löffel so auf, daß der freie Rand der Umfangswand des Löffels die Formraummembran 314 zusätzlich spannt, so begrenzt der Löffel zusammen mit der Formraummembran 314 ähnlich einen Formraum 326, wie dies einer der oben beschriebenen Löffel zusammen mit der Zahnreihe benachbarten Weichgeweben im Mund eines Patienten tut.

In Figur 29 ist anstelle eines der oben beschriebenen Löffels ein abgewandelter Löffel 328 gezeigt, der sich besonders gut für Doublierzwecke eignet, da er gestattet, die Größe des Formraumes 326 gemäß der Höhe des Zahnmodelles 324 zu variieren, wodurch Abformmaterial gespart werden kann.

Der Löffel 328 hat ein Bodenteil 330 und ein von dessen Rand getragenes feststehendes Wandteil 332. Letzteres ist mit einer in Wandlängsrichtung verlaufenden Nut 334 versehen, in welche ein in Figur 29 in vertikaler Richtung bewegliches Wandteil 336 eingreift. Die Seitenflächen des Wandteiles 336 sind gegen die Nut 334 durch Dichtungen 338 abgedichtet. An der obenliegenden Stirnfläche des beweglichen Wandteiles 336 greifen mehrere in Nutlängsrichtung verteilte Anschlagschrauben 340 an, die in vertikaler Richtung verstellbar in Gewinden laufen, die im Randbereich des Bodenteiles 330 vorgesehen sind. Die Anschlagschrauben 340 sind jeweils von einer Schraubenfeder 342 umgeben, wodurch die beweglichen Wandteile 336 in eine ausgefahrene Stellung vorgespannt sind.

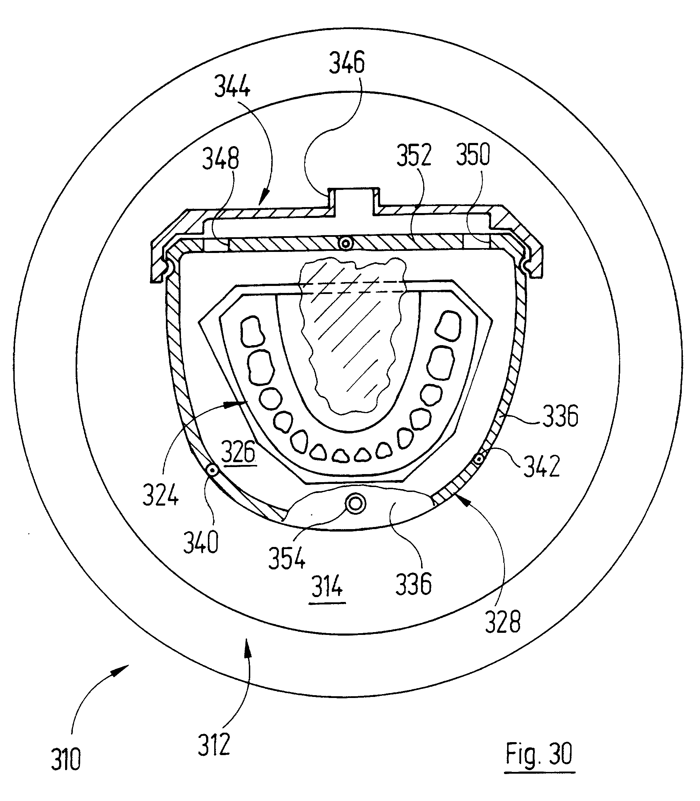

Wie aus den Figuren 29 und 30 ersichtlich, hat der Löffel 328 ein auf seine Rückseite aufgeschobenes Verteilteil 344 mit einem Abformmaterial-Anschlußstutzen 346. Über das Verteilteil 344 wird Speiseöffnungen 348, 350, die in einer Rückwand 352 des Löffels 328 vorgesehen sind, Abformmaterial zugeführt. Ein Anschlußstutzen 354 zur Herstellung einer Verbindung mit einer Unterdruckquelle kann im vorderen unter Einsatzbedingungen oberen Abschnitt des Bodenteiles 330 vorgesehen sein, wie in Figur 30 dargestellt.

Das Zuführen von Abformmaterial zum Anschlußstutzen 346 kann ähnlich erfolgen, wie oben stehend in Verbindung mit intraoraler Abformung beschrieben. Gleiches gilt für die Unterdruckbeaufschlagung des Anschlußstutzens 354 mit der Maßgabe, daß man beim Einstellen der Vakuumwerte nicht auf Schäden an vitalem Gewebe Rücksicht zu nehmen braucht. Man kann somit auch starke Vakua (Druckabsenkung) bis hinunter zu 990 mbar unter Normaldruck einstellen. Dies macht es möglich, das Abformmaterial nur durch Vakuum einzusaugen und ohne zusätzliche Druckbeaufschlagung des eingespeisten Abformmateriales zu arbeiten.

Arbeitet man ohne Vakuumbeaufschlagung des Löffels 328 so kann man den Druck des zugeführten Abformmateriales auch größer als bei intraoraler Abformung wählen, da wiederum nicht auf Gewebeschäden geachtet werden muß. Wenn der Löffel 328 in geeigneter Weise gegen die Formraummembran 314 angelegt wird (z.B. durch in Figur 29 an der Oberseite des Löffels 328 angreifende Spannschrauben), so können Speisedrucke für das Abformmaterial bis hin zu 15 bar verwendet werden. Dies macht es möglich, das Zuführen von Abformmaterial auch ausschließlich durch hohe Druckbeaufschlagung des letzteren durchzuführen und auf ein Evakuieren des Formraumes zu verzichten. In diesem Falle dienen dann die Vakuumspeiseöffnungen zur Entlüftung des Formraumes.

Da auch bei der Doubliereinrichtung gemäß Figur 29 und 30 die Zähne (des Zahnmodelles) umströmt werden und nicht in ein plastisch verformbares Material hineingedrückt werden, erhält man wieder dieselben Vorteile wie oben beschrieben.

Wie aus Figur 29 ersichtlich, sind im Boden des becherförmigen Gehäuses 312 Bohrungen 356 vorgesehen. Über diese wird der zwischen der Formraummembran 314 und dem Gehäuseboden liegende Membranrückraum 358 entlüftet. In einer Variante kann man die Bohrungen 356 auch mit einer einstellbaren Quelle für niederen Unterdruck verbinden, um schon eine Vorformung der Formraummembran zu im wesentlichen kalottenförmiger Gestalt zu erzielen. Der Rand des Löffel 328 braucht dann die Formraummembran nicht mehr so stark zu verformen.

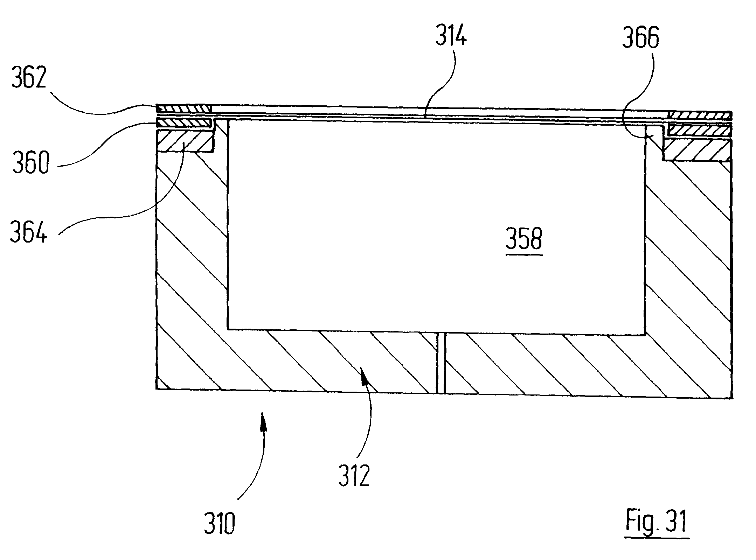

Figur 31 zeigt eine andere Art der Festlegung der Formraummembran 314 am Gehäuse 312. Die Ränder der Formraummembran 314 sind zwischen aus Eisen hergestellte Ringe 360, 362 eingespannt, und in die Oberseite der Umfangswand des Gehäuses 312 ist ein gestreckter Permanentmagnet 364 (oder eine Aufeinanderfolge kleinerer Permanentmagnete) eingelassen. Wie aus Figur 31 ersichtlich, steht ein Rippenabschnitt 366 der Umfangswand des Gehäuses 312 nach oben über die Stirnfläche des Permanentmagneten 364 über und bildet somit einen radialen Anschlag für den unteren Ring 362. Auf diese Weise kann die Formraummembran 314 auch stark belastet werden, ohne daß ihr Rand freikommt.

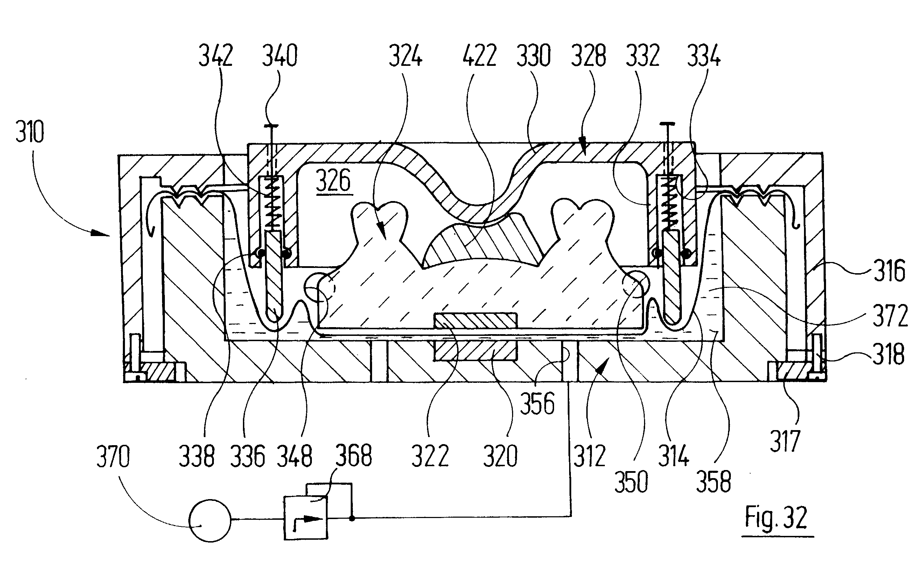

Die in Figur 32 gezeigte Unterform 310 entspricht vom mechanischen Grundaufbau her derjenigen nach den Figuren 29 und 30. Im Boden des Gehäuses 312 ist nun aber nur eine einzige Bohrung 356 vorgesehen, und diese steht über einen Druckregler 368 mit einer Druckmittelquelle 370 in Verbindung. Das von der Druckquelle 370 abgegebene Fluid ist vorzugsweise eine Flüssigkeit oder ein Gel. Auf diese Weise liegt unter der Formraummembran 314 ein Polster 372 aus Flüssigkeit oder Gel.

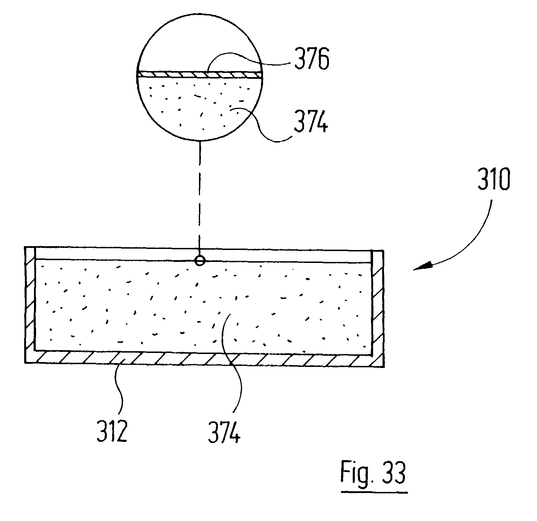

Bei der in Figur 33 gezeigten Unterform 310 ist in das becherförmige Gehäuse 312 ein nachgiebiges Schaumstoffteil 374 eingesetzt. Wie aus der Ausschnittvergrößerung ersichtlich, hat dieses Schaumstoffteil eine strömungsmitteldichte Oberflächenhaut 376, die beim Schäumen mit erzeugt wurde. Alternativ kann man auf die Oberseite eines offenporigen Schaumstoffteiles eine strömungsmitteldichte Folie auflegen, welche die Oberflächenhaut 376 ersetzt.

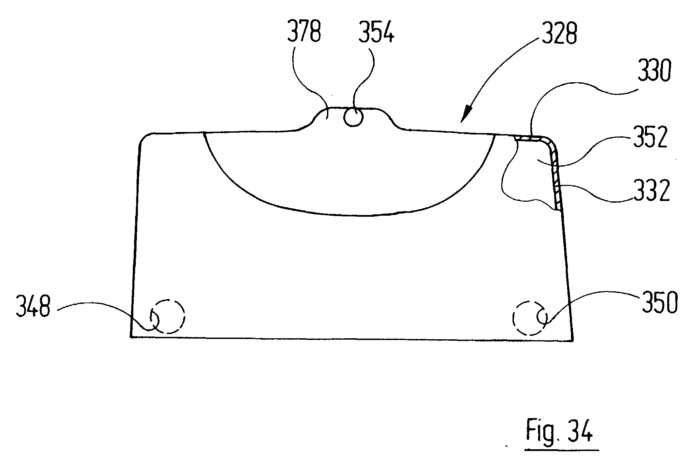

Figur 34 zeigt einen abgewandelten Löffel 1, der von den Strömungsverhältnissen her dem in Figur 29 gezeigten Löffel entspricht, jedoch als Vakuum-tiefgezogenes Wegwerfteil ausgebildet ist. Der Vakuumanschlußstutzen 354 ist in einem hochgezogenen Abschnitt 378 des Bodenteils 330 vorgesehen.

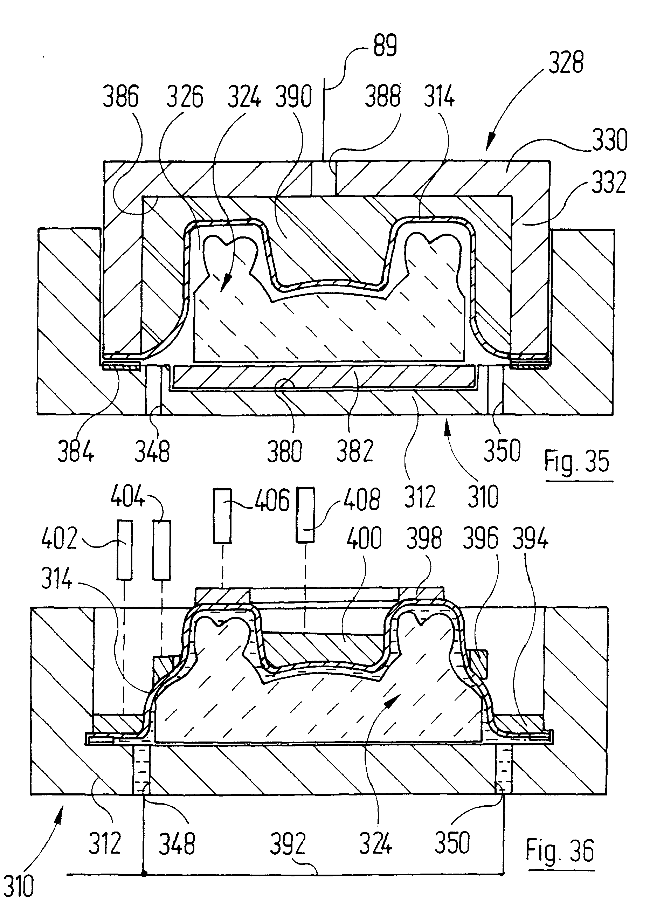

Bei der in Figur 35 gezeigten Doubliereinrichtung ist der Boden des Gehäuses 312 mit einer Ausnehmung 380 versehen, in welche eine Modellbasisplatte 382 formschlüssig einsetzbar ist, die ihrerseits das Zahnmodell 324 trägt. Die Formraummembran 314 ist nun am Ende der Umfangswand des becherförmigen Löffels 328 angebracht. In seinem unterhalb der Umfangswand des Löffels 328 liegenden Bereich ist in den Boden des Gehäuses 312 eine Dichtung 384 eingelegt.

Die Formraummembran 314 begrenzt nun zusammen mit dem becherförmigen Gehäuse des Löffels 328 einen Arbeitsraum 386, der über eine Bohrung 388 in der obenliegenden Wand des Löffels 328 zugänglich ist.

Zur Einstellung eines genau vorgegebenen Abstandes zwischen der Formraummembran 314 und dem Zahnmodell 324 beim Herstellen des Zahnabdruckes ist in den Arbeitsraum 386 ein Stützkörper 390 eingesetzt, dessen nach unten weisende Stirnfläche so konturiert ist, wie man die Geometrie der Formraummembran beim Herstellen des Abdruckes wünscht. Der Stützkörper 390 ist aus einem luftdurchlässigen Material, z.B. offenporigem Schaumstoff oder einem lockeren Metallfilz, hergestellt, und durch Unterdruckbeaufschlagung des Arbeitsraumes 386 mit einem Unterdruck, der größer ist als der Unterdruck im Formraum 326 ist gewährleistet, daß die Formraummembran 340 an der Stirnfläche des Stützkörpers 390 anliegt.

Bei der Doubliervorrichtung nach Figur 36 stellt sich die Größe des Formraumes 326 dynamisch unter den auf die Formraummembran 314 einwirkenden Kräften ein:

Die Unterseite der am unteren Ende der Umfangswand des Gehäuses 312 dicht festgelegten Formraummembran 314 ist mit dem Druck des über eine Speiseleitung 392 zugeführten Abformmateriales beaufschlagt. In Abwärtsrichtung wirken verschiedenen Oberflächenbereichen der Formraummembran zugeordnete Gewichtsstücke: ein dem äußeren Rand der der Formraummembran zugeordnetes Gewichtsstück 394, ein dem Übergangsbereich zwischen Kiefer und Zähnen zugeordnetes Gewichtsstück 396, ein der Zahnoberflächen zugeordnetes Gewichtsstück 398 und ein dem mittleren Modellbereich zugeordnetes Gewichtsstück 400.

Die Gewichtsstücke sind in ihrer Grundgeometrie Standardgeometrien der verschiedenen Modellabschnitte angepaßt. Da die Gewichtsstücke beim Abformen des Zahnmodelles sowieso angehoben werden, ist eine bessere Anpassung an die Geometrie des gerade abzuformenden Modelles nicht notwendig.

Durch Wahl von Materialien unterschiedlichen spezifischen Gewichts (z.B. Kunststoff ./. Aluminium ./. Eisen) läßt sich vorgeben, welche Gewichtsstücke bei Einspeisung des Abformmateriales mehr, welche weniger angehoben werden. Auf diese Weise läßt sich die Dicke der Abformmaterialschicht lokal steuern.

Auch die Geometrie der Gewichtsstücke hat auf die lokale Stärke des Modellabdruckes Auswirkung.

Über den Gewichtsstücken 394 bis 400 sind optische Stellungsgeber 402 bis 408 angeordnet, welche das Ansteigen der Gewichtstücke messen, das durch das Einspeisen von Abformmaterial unter die Formraummembran 314 hervorgerufen wird. Das Vorliegen einer ausreichend dicken Schicht aus Abformmaterial über dem Zahnmodell 324 kann anhand der Ausgangssignale der Stellungsgeber 402 bis 408 erkannt werden. Dann wird die Zufuhr von Abformmaterial eingestellt.

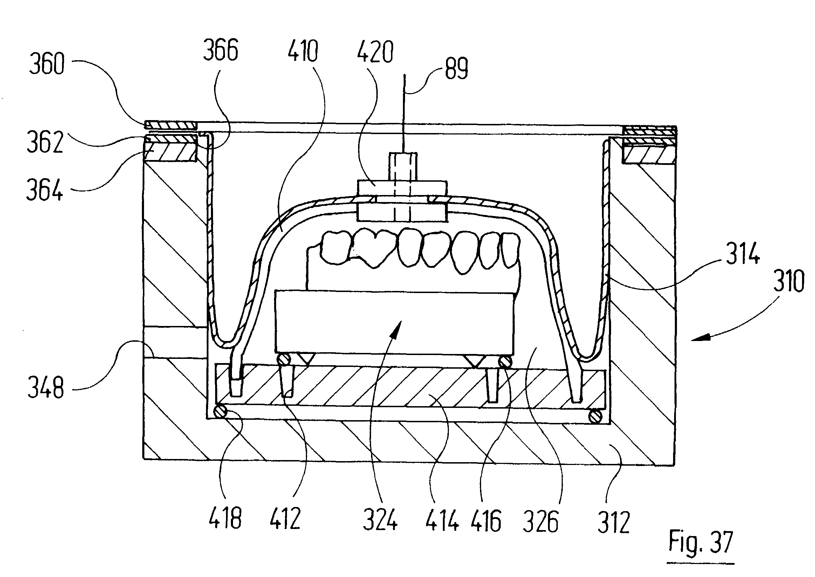

Die in Figur 37 gezeigte Doubliervorrichtung arbeitet ähnlich wie die nach Figur 35, mit dem Unterschied, daß der Stützkörper 390 unter der Formraummembran 314 angeordnet ist und als Armierung im Modellabdruck verbleibt. Der Stützkörper 390 gemäß Figur 37 besteht aus einer Mehrzahl von Stützbügeln 410, deren Enden in kegelförmigen Bohrungen 412 einer Basisplatte 414 festgelegt sind.

Zwischen der Unterseite des Zahnmodelles 324 und der Oberseite der Basisplatte 414 ist eine umlaufende Dichtung 416 vorgesehen. Eine weiter Dichtung 418 liegt zwischen dem unteren Rand der Basisplatte 414 und dem Boden des Gehäuses 312.

Die Basisplatte 414 kann auch weggelassen und der Boden der Doubliervorrichtung selbst entsprechend ausgebildet werden.

Die Formraummembran 314 ist ähnlich am Gehäuse 312 festgelegt, wie obenstehend unter Bezugnahme auf Figur 31 beschrieben.

Zum Zuführen des Abformmateriales sind im Gehäuse 312 mehrere winkelversetzte Speiseöffnungen 348 vorgesehen. Zur Vakuumbeaufschlagung des Formraumes 326 ist in die Mitte der Formraummembran 314 eine Fitting 420 dicht eingesetzt. Bei anstehendem Unterdruck wird so die Formraummembran eng gegen das durch die Sützbügel 410 gebildete Stützgerüst gelegt.

In das Ende einer mit dem Fitting 420 in Verbindung stehenden Vakuum-Anschlußleitung 89 ist wiederum ein Sperrelement (nicht dargestellt) eingesetzt, das durch Abformmaterial blockiert wird, so daß letzteres nicht in die Sauganlage gelangen kann. Es kann sich hierbei z.B. um einen Wattebausch handeln.

Bei der in Figur 37 gezeigten Doubliervorrichtung kann man durch Biegen und Ablängen der einzelnen Stützbügel 410 die Form vorgeben, welche die Formraummembran 314 unter Arbeitsbedingungen einnimmt. Es versteht sich, daß man die Bügel unter unzulässig große Durchhänge in der Formraummembran vermeidenden kleinen Abständen aufstellt, ggf. nicht nur zueinander parallele Stützbügel sondern auch transversale Stützbügel vorsieht.

Bei den oben beschriebenen Abformverfahren wurde der Formhohlraum jeweils durch einen Löffel und die abzubildende Oberfläche und dieser benachbarte elastisch nachgiebige Materialien (Weichgewebe oder elastiche Dichtwand) begrenzt. Dabei wurde angestrebt, den Formraum möglichst klein zu halten, um Abformmaterial zu sparen.

Es versteht sich, daß man zusätzlich in Bereichen, in denen man den Löffel oder die Formraummembran nicht nahe an die abzuformende Oberfläche heranbringen kann, Totraumkörper verwenden kann, um nicht für das Füllen keine interessierenden Einzelheiten enthaltender Raumbereiche teueres Abformmaterial zu verwenden. Derartige Totraumelemente können z.B. vorgefertigte Standardelemente sein, die an vorgegebenen Stellen auf einen Löffel oder ein Modell aufgeclipst oder aufgeklebt werden können. Es kann sich hierbei aber auch um plastisch verformbare Elemente handeln, die in nicht interessierenden Bereichen eines Modelles entsprechende Bereiche eines Löffels oder des Modelles eingebracht werden. So zeigen z.B. die Figuren 29 und 30 einen Totraumkörper 422, der durch eine Knetmasse gebildet ist.

Bei einer weiter abgewandelten in der Zeichnung nicht wiedergegebenen Ausführungsform der Erfindung kann die Unterform auch nur eine vorzugsweise planparallele Platte sein, die mit einer starr aufliegenden Gummischeibe zur Dichtung an einem Doublierlöffel versehen ist, der etwa gemäß Figur 32 oder 34 ausgebildet ist.

Statt dessen kann man auch auf den Rand des Löffels eine nachgiebige Dichtung aufsetzen.

Ähnlich wie bei der Herstellung von intraoralen Teilabdrücken kann auch bei der Herstellung von Negativformen von Modellen mit Platzhalterteilen gearbeitet werden, wenn nur Teildoublierungen gewünscht werden.

## Patentansprüche

1. Abformlöffel zum Herstellen von Zahnabdrücken, welcher eine Mehrzahl benachbarter Zahnpositionen eines Kiefers überdecken kann und in seinem Verlauf grob dem Kieferverlauf angepaßt ist, wobei die freien Ränder der Löffelwände (12, 16, 26) so verlaufen, daß sie zusammen mit Weichgeweben des Mundes eines Patienten eine Dichtstelle bilden können, und welcher mit mindestens einem mit dem Löffelinneren in Verbindung stehenden Abformmaterial-Anschlußelement (30) versehen ist, das mit einer Quelle (94 bis 108) für flüssiges härtbares Abformmaterial (114) verbindbar (148) ist, und mindestens ein mit dem Löffelinneren in Verbindung stehendes Vakuum-Anschlußelement (32, 34, 36, 194, 198) aufweist, welches mit einer Unterdruckquelle (90, 92) verbindbar ist, **dadurch gekennzeichnet, daß** er ein Löffelgrundteil (210) und ein auf dessen Außenwand (214) aufgesetztes Verteilerteil (212) aufweist; daß das Löffelgrundteil (210) in seiner Außenwand mindestens eine Abformmaterial-Speiseöffnung (232) und/oder mindestens eine hiervon beabstandete Vakuum-Speiseöffnung (234, 236) aufweist; und daß in dem Verteilerteil (212) eine Abformmaterial-Speisekanalanordnung (250, 251, 252) vorgesehen ist, welche ein vom Verteilerteil (212) getragenes Abformmaterial-Anschlußelement (240) mit den Abformmaterial-Speiseöffnungen (232) verbindet und/oder eine Vakuum-Speisekanal-Anordnung (248) im Verteilerteil (212) vorgesehen ist, durch welche mindestens ein vom Verteilerteil (212) getragenes Vakuum-Anschlußelement (242, 244) mit der mindestens einen Vakuum-Speiseöffnung (234, 236) verbunden ist.

2. Abformlöffel nach Anspruch 1, **dadurch gekennzeichnet, daß** mindestens eine Vakuum-Speiseöffnung (236) im anterioren Endabschnitt des Löffelgrundteiles (210) vorgesehen ist.

3. Abformlöffel nach Anspruch 1 oder 2, **dadurch gekennzeichnet, daß** mindestens eine Abformmaterial-Speiseöffnung (232) in einem distalen Endabschnitt des Löffelgrundteiles (210) angeordnet ist.

4. Abformlöffel nach einem der Ansprüche 1-3, **dadurch gekennzeichnet, daß** die den Speiseöffnungen (232, 234, 236) benachbarten Abschnitte der Kanalanordnungen des Verteilerteils (212) als zum Löffelgrundteil (10) hin offene Nuten (248, 252) ausgebildet sind.

5. Abformlöffel nach einem der Ansprüche 1-4, **dadurch gekennzeichnet, daß** das Löffelgrundteil (210) und das Verteilerteil (212) zusammenarbeitende Positioniermittel (228, 230) aufweisen.

6. Abformlöffel nach Anspruch 5, **dadurch gekennzeichnet, daß** die Positioniermittel Positioniernuten (228) und Positionierrippen (230) aufweisen, welche sich in der Nachbarschaft der Ränder der Außenwand (214) des Löffelgrundteiles (210) erstrecken.

7. Abformlöffel nach einem der Ansprüche 1-6, **dadurch gekennzeichnet, daß** das Verteilerteil (212) durch eine Rastverbindung (238) lösbar mit dem Löffelgrundteil (210) verbunden ist.

8. Abformlöffel nach einem der Ansprüche 1-7, **dadurch gekennzeichnet, daß** die dem Löffelgrundteil (210) zugewandte Begrenzungsfläche des Verteilerteiles (212) mindestens eine Saugtasche (258) aufweist, welche über eine weitere Kanalanordnung (254, 256) des Verteilerteiles (212) mit einem gesonderten Vakuum-Anschlußelement (246) verbunden ist.

9. Abformlöffel nach einem der Ansprüche 1-8, **dadurch gekennzeichnet, daß** zumindest ein Abschnitt (226) des Löffelgrundteiles (210) aus transparentem Material hergestellt ist.

10. Abformlöffel nach einem der Ansprüche 1-9, **dadurch gekennzeichnet, daß** die Speiseöffnungen (232, 234, 236) und die Kanalanordnungen (248; 250, 251, 252; 254, 256) symmetrisch zu einer Längsmittelebene des Abformlöffels sind.

11. Abformlöffel nach Anspruch 10, **dadurch gekennzeichnet, daß** im anterioren Endabschnitt des Verteilerteiles (212) zwei Vakuum-Anschlußelemente (242, 244) vorgesehen sind, welche über einen Abschnitt der Vakuum-Speisekanalanordnung (248) mit einer mittigen Vakuum-Speiseöffnung (236) und vorzugsweise zwei seitlichen Vakuumspeiseöffnungen etwa in Höhe der Eckzahnposition des Löffelgrundteiles (210) in Verbindung stehen.

12. Abformlöffel nach einem der Ansprüche 1-11, **dadurch gekennzeichnet, daß** die Außenfläche (260) des Verteilerteiles (212) ballig ist.

13. Abformlöffel nach einem der Ansprüche 1-12, **dadurch gekennzeichnet, daß** das Löffelgrundteil (210) und/ oder das Verteilerteil (212) ein Kunststoff-Formteil ist.

14. Abformlöffel nach einem der Ansprüche 1-13, **dadurch gekennzeichnet, daß** das Löffelgrundteil und/oder das Verteilerteil (212) ein Metallformteil ist.

15. Abformlöffel nach einem der Ansprüche 1-14, **dadurch gekennzeichnet, daß** die verschiedenen Anschlußelemente (240, 242, 244, 246) eng benachbart im anterioren Endabschnitt des Verteilerteiles (212) angeordnet sind.

16. Abformlöffel nach einem der Ansprüche 1-15, **dadurch gekennzeichnet, daß** die Vakuum-Speisekanalanordnung (248) in Strömungsrichtung gesehen vor mindestens einer Vakuum-Speiseöffnung (236) mindestens eine Abformmaterial-Sperre (249) aufweist.

17. Abformlöffel nach Anspruch 16, **dadurch gekennzeichnet, daß** die Abformmaterial-Sperren (249) jeweils durch einen erhöhten Abschnitt des Bodens einer Verteilernut (248) gebildet sind, welche Teil der Vakuum-Speisekanal-anordnung ist.

18. Vorrichtung nach einem der Ansprüche 1-17, **dadurch gekennzeichnet, daß** der Löffel (210, 212) eine mit einem ersten Ende des Formraumes in Verbindung stehende erste Speiseöffnung (232) und eine mit einem zweiten Ende des Formraumes in Verbindung stehende zweite Speiseöffnung (234) aufweist.

19. Vorrichtung zum Herstellen von Zahnabdrücken mit einem Abformlöffel nach einem der Ansprüche 1-18, **gekennzeichnet durch** eine Unterform (310), auf welcher ein abzuformendes Objekt (324) festlegbar (320, 322) ist und welche eine das abzuformendes Objekt (324) umgebende vorzugsweise verformbare Dichtwand (314) aufweist, die zusammen mit dem Löffel (328) einen dichten Formraum (326) begrenzt.

20. Vorrichtung nach Anspruch 19, **dadurch gekennzeichnet, daß** die Dichtwand (314) eine an einem Gehäuse (312) der Unterform (310) festgelegte Dichtmembran aufweist.

21. Vorrichtung nach Anspruch 20, **dadurch gekennzeichnet, daß** die Dichtmemberan (314) zusammen mit dem Gehäuse (312) einen Membranrückraum (358) begrenzt, der mit einem Fluid (372) gefüllt ist.

22. Vorrichtung nach Anspruch 21, **dadurch gekennzeichnet, daß** das Fluid ein unter Unterdruck stehenes Gas ist, wodurch die Dichtmembran (314) in eine konkave Form vorgespannt wird.

23. Vorrichtung nach Anspruch 22, **dadurch gekennzeichnet, daß** das Fluid eine Flüssigkeit oder ein Gel ist.

24. Vorrichtung nach einem der Ansprüche 21-23, **gekennzeichnet durch** einen mit dem Membranrückraum (358) in Verbindung stehenden Druckregler (368).

25. Vorrichtung nach Anspruch 19, **dadurch gekennzeichnet, daß** die Dichtwand elastisch verformbares Material (374) umfaßt.

26. Vorrichtung nach Anspruch 25, **dadurch gekennzeichnet, daß** die freie Stirnfläche des Schaumstoffmateriales eine dichte Oberflächenhaut (376) aufweist oder eine strömungsmitteldichte Folie trägt.

27. Vorrichtung nach einem der Ansprüche 19-26, **dadurch gekennzeichnet, daß** der Löffel (328) eine in der Höhe einstellbare äußere Umfangswand (332 - 336) aufweist.

28. Vorrichtung nach Anspruch 27, **dadurch gekennzeichnet, daß** die Umfangswand ein feststehendes Wandteil (332) und ein in einer Nut (334) des letzteren in Höhenrichtung bewegliches Wandteil (336) sowie Mittel (340) zum Vorgeben des Abstandes zwischen beweglichem Wandteil (336) und feststehendem Wandteil (332) aufweist.

29. Vorrichtung nach Anspruch 28, **dadurch gekennzeichnet, daß** das bewegliche Wandteil (336) durch eine Federanordnung (342) in eine ausgefahrene Stellung vorgespannt ist.

30. Vorrichtung nach Anspruch 28 oder 29, **dadurch gekennzeichnet, daß** das bewegliche Wandteil (336) durch eine Dichtungsanordnung (338) gegen die Nut (334) des feststehenden Wandteiles (332) abgedichtet ist.

31. Vorrichtung nach einem der Ansprüche 19-30, **dadurch gekennzeichnet, daß** der Löffel (328) ein aus Kunststoff gefertigtes einstückiges Wegwerfteil ist, insbesondere ein tiefgezogenes Teil.

32. Vorrichtung nach einem der Ansprüche 19-31, **dadurch gekennzeichnet, daß** wenigstens eine mit einer Vakuumquelle verbindbare Speiseöffnung (346) des Löffels (328) in einem unter Einsatzbedingungen oberen Wandabschnitt (330) des Löffels angeordnet ist.

33. Vorrichtung nach einem der Ansprüche 19-32, **dadurch gekennzeichnet, daß** mindestens eine der Speiseöffnungen (348, 350) in einer unter Einsatzbedingungen hinteren Wand (352) des Löffels (328) vorgesehen sind.

34. Vorrichtung nach einem der Ansprüche 19-33, **dadurch gekennzeichnet, daß** der Löffel (1) ein becherförmiges starres Löffelgehäuse (330, 332) und eine am letzteren festgelegte elastisch verformbare Formraummembran (314) aufweist.

35. Vorrichtung nach Anspruch 34, **gekennzeichnet durch** Mittel (390, 89) zum Konturieren der Formraummembran (314).

36. Vorrichtung nach Anspruch 35, **dadurch gekennzeichnet, daß** die Konturiermittel ein konturiertes Stützelement (390) und Mittel (89) zum Vorspannen der Formraummembran (314) gegen das Stützelement (390) aufweisen.

37. Vorrichtung nach Anspruch 36, **dadurch gekennzeichnet, daß** das Stützelement (390; 392) gitterähnlich oder offenporig ausgebildet ist und die Vorspannmittel eine Unterdruckquelle aufweisen, die mit dem durch die Formraummembran (314) und das Löffelgehäuse begrenzten Arbeitsraum (386) verbindbar ist.

38. Vorrichtung nach Anspruch 36 oder 37, **dadurch gekennzeichnet, daß** die Vorspannmittel eine Druckquelle aufweisen, die mit dem vor der Formraummembran (314) liegenden Formraum (326) verbindbar sind.

39. Vorrichtung nach einem der Ansprüche 20-38, **dadurch gekennzeichnet, daß** der Löffel (328) eine über dem Modell (324) verlaufende Formraummembran (314) aufweist und Mittel (392, 394-400) zum unterschiedlichen Belasten unterschiedlicher Bereiche der Formraummembran (314) vorgesehen sind, wobei die Formraummembran (314) vorzugsweise an einem unteren Abschnitt eines Gehäuses (312) der Unterform (310) festgelegt ist.

40. Vorrichtung nach Anspruch 39, **dadurch gekennzeichnet, daß** die Belastungsmittel an unterschiedliche Bereiche des Modelles (324) angepaßte Gewichtsstücke (394-400) aufweisen.

41. Vorrichtung nach Anspruch 40, **dadurch gekennzeichnet, daß** sie mindestens einen mit einem der Gewichtsstücke (394-400) zusammenarbeitende Stellungsgeber (402-408) aufweist.

42. Vorrichtung nach einem der Ansprüche 19-41 oder Abformlöffel nach einem der Ansprüche 1-18, **gekennzeichnet durch** mindestens eines in den Löffel (328) eingesetztes Totraumelement (422), welches aus einer Mehrzahl von Standard-Totraumelementen ausgewählt ist oder plastisch verformbar ist.

## Claims

1. Impression tray for producing tooth impressions that can cover a plurality of adjacent tooth positions of a jaw, the contour of the tray roughly matching the contour of the jaw, wherein the free edges of the tray walls (12, 16, 26) run so that they can form together with soft tissues of a patient's mouth a sealing point, which tray is provided with at least one impression material connection element (30) communicating with the interior of the tray that can be connected to a source (94 to 108) for liquid hardenable impression material (114), and has at least one vacuum connection element (32, 34, 36, 194, 198) communicating with the interior of the tray and that can be connected to a reduced pressure source (90, 92), wherein the impression tray has a tray base part (210) and a distributor part (212) mounted on its rear wall (214), the tray base part (210) has in its outer wall at least one impression material feed opening (232) and/or at least one vacuum feed opening (234, 236) spaced therefrom, and an impression material feed channel arrangement (250, 251, 252) is provided in the distributor part (212) that connects an impression material connection element (240) mounted on the distributor part (212) to the impression material feed openings (232), and/or a vacuum feed channel arrangement (248) is provided in the distributor part (212) through which at least one vacuum connection element (242, 244) mounted on the distributor part (212) can be connected to the at least one vacuum feed opening (234, 236).

2. Impression tray as claimed in claim 1, wherein at least one vacuum feed opening (236) is provided in the anterior end section of the tray base part (210).

3. Impression tray as claimed in claim 1 or 2, wherein at least one impression material feed opening (232) is arranged in a distal end section of the tray base part (210).

4. Impression tray as claimed in one of claims 1-3, wherein the sections of the channel arrangements of the distributor part (212) adjacent to the feed openings (232, 234, 236) are formed as open grooves (248, 252) up to the tray base part (10).

5. Impression tray as claimed in one of claims 1-4, wherein the tray base part (210) and the distributor part (212) have cooperating positioning means (228, 230).

6. Impression tray as claimed in claim 5, wherein the positioning means have positioning grooves (228) and positioning ribs (230), which extend in the vicinity of the edges of the external wall (214) of the tray base part (210).

7. Impression tray as claimed in one of claims 1-6, wherein the distributor part (212) is detachably connected by means of an catch connection (238) to the tray base part (210).

8. Impression tray as claimed in one of claims 1-7, wherein the boundary surface of the distributor part (212) facing the tray base part (210) has at least one suction pocket (258) that is connected via a further channel arrangement (254, 256) of the distributor part (212) to a separate vacuum connection element (246).

9. Impression tray as claimed in one of claims 1-8, wherein at least one section (226) of the tray base part (210) is made of transparent material.

10. Impression tray as claimed in one of claims 1-9, wherein the feed openings (232, 234, 236) and the channel arrangements (248, 250, 251, 252, 254, 256) are symmetrical relative to a longitudinal centre plane of the impression tray.

11. Impression tray as claimed in claim 10, wherein two vacuum connection elements (242, 244) are provided in the anterior end section of the distributor part (212), which elements communicate via a section of the vacuum feed channel arrangement (248) with a central vacuum feed opening (236) and preferably with two lateral vacuum feed openings approximately at the height of the canine tooth position of the tray base part (210).

12. Impression tray as claimed in one of claims 1-11, wherein the external surface (260) of the distributor part (212) is spherical.

13. Impression tray as claimed in one of claims 1-12, wherein the tray base part (210) and/or the distributor part (212) is a plastics moulding.

14. Impression tray as claimed in one of claims 1-13, wherein the tray base part and/or the distributor part (212) is a metal moulding.

15. Impression tray as claimed in one of claims 1-14, wherein the various connection elements (240, 242, 244, 246) are arranged closely adjacent in the anterior end section of the distributor part (212).

16. Impression tray as claimed in one of claims 1-15, wherein the vacuum feed channel arrangement (248) has, looking in the flow direction, at least one impression material lock (249) in front of at least one vacuum feed opening (236).

17. Impression tray as claimed in claim 16, wherein the impression material locks (249) are in each case formed by a raised section of the floor of a distributor groove (248), which is part of the vacuum feed channel arrangement.

18. Device as claimed in one of claims 1-17, wherein the tray (210, 212) has a feed opening (232) communicating with a first end of the impression space and a second feed opening (234) communicating with a second end of the impression space.

19. Device for producing tooth impressions with an impression tray as claimed in one of claims 1-18, wherein there is a cavity mould (310) on which an object (324) of which an impression is to be made can be secured (320, 322), and which has a preferably deformable sealing wall (314) surrounding the object (324) of which an impression is to be made, which together with the tray (328) defines a sealed impression space (326).

20. Device as claimed in claim 19, wherein the sealing wall (314) has a sealing membrane secured on a housing (312) of the cavity mould (310).

21. Device as claimed in claim 20, wherein the sealing membrane (314) together with the housing (312) defines a membrane rear space (358) that is filled with a fluid (372).

22. Device as claimed in claim 21, wherein the fluid is a gas under reduced pressure, whereby the sealing membrane (314) is prestressed into a concave shape.

23. Device as claimed in claim 22, wherein the fluid is a liquid or a gel.

24. Device as claimed in one of claims 21-23, wherein a pressure regulator (368) communicates with the membrane rear space (358).

25. Device as claimed in claim 19, wherein the sealing wall comprises elastically deformable material (374).

26. Device as claimed in claim 25, wherein the free front surface of the foam material has a tight surface skin (376) or carries a film impermeable to flow media.

27. Device as claimed in one of claims 19-26, wherein the tray (328) has an external circumferential wall (332-336) that is adjustable as regards height.

28. Device as claimed in claim 27, wherein the circumferential wall has a stationary wall part (332) and a vertically movable wall part (336) in a groove (334) of the latter, as well as means (340) for predetermining the spacing between the movable wall part (336) and stationary wall part (332).

29. Device as claimed in claim 28, wherein the movable wall part (336) is pretensioned in an extended position by means of a spring arrangement (342).

30. Device as claimed in claim 28 or 29, wherein the movable wall part (336) is sealed by a sealing arrangement (338) against the groove (334) of the stationary wall part (332).

31. Device as claimed in one of claims 19-30 wherein the tray (328) is a one-piece disposable part made of plastics material, in particular a deep-drawn part.

32. Device as claimed in one of claims 19-31, wherein at least one feed opening (346) of the tray (328) that can be connected to a vacuum source is arranged in an, under operating conditions, upper wall section (330) of the tray.

33. Device as claimed in one of claims 19-32, wherein at least one of the feed openings (348, 350) is provided in an, under operating conditions, rear wall (352) of the tray (328).

34. Device as claimed in one of claims 19-33, wherein the tray (1) has a bowl-shaped rigid tray housing (330, 332) and an elastically deformable impression space membrane (314) secured to the latter.

35. Device as claimed in claim 34, wherein there are means (390, 89) for contouring the impression space membrane (314).

36. Device as claimed in claim 35, wherein the contouring means have a contoured supporting element (390) and means (89) for pretensioning the impression space membrane (314) against the supporting element (390).

37. Device as claimed in claim 36, wherein the supporting element (390, 392) is lattice-like or open-pore and the pretensioning means have a reduced pressure source that can be connected to the working space (386) bounded by the impression space membrane (314) and the tray housing.

38. Device as claimed in claim 36 or 37, wherein the pretensioning means have a pressure source that can be connected to the impression space (326) in front of the impression space membrane (314).

39. Device as claimed in one of claims 20-38, wherein the tray (328) has an impression space membrane (314) running over the model (324) and means (392, 394-400) are provided for subjecting different regions of the impression space membrane (314) to different loads, the impression space membrane (314) preferably being secured to a lower section of a housing (312) of the cavity mould (310).

40. Device as claimed in claim 39, wherein the loading means have weights (394-400) adapted to different regions of the model (324).

41. Device as claimed in claim 40, wherein it has at least one position indicator (402-408) cooperating with one of the weights (394-400).

42. Device as claimed in one of claims 19-41, or impression tray as claimed in one of claims 1-18, wherein there is at least one dead space element (422) inserted in the tray (328), which is chosen from a plurality of standard dead space elements or is plastically deformable.

## Revendications

1. Porte-empreinte pour réaliser des empreintes dentaires, capable de recouvrir une pluralité de positions de dents voisines d'un maxillaire et dont le profil est à peu près adapté au profil du maxillaire, les bords libres des parois (12, 16, 26) du porte-empreinte ayant un profil tel qu'ils peuvent former une étanchéité ensemble avec les tissus mous de la bouche d'un -patient, et muni d'au moins un élément de raccordement pour matériau de prise d'empreinte (30) relié avec l'intérieur du porte-empreinte et pouvant être relié (148) à une source (94 à 108) de matériau de prise d'empreinte liquide durcissable (114) et présentant au moins un élément de raccordement de vide (32, 34, 36, 194, 198) relié avec l'intérieur du porte-empreinte et pouvant être relié à une source de dépression (90, 92), **caractérisé en ce qu'**il présente un fond de porte-empreinte (210) et un répartiteur (212) placé sur sa paroi externe (214) ; **en ce que** le fond de porte-empreinte (210) présente dans sa paroi externe au moins un orifice d'arrivée de matériau de prise d'empreinte (232) et/ou au moins un orifice d'arrivée de vide (234, 236) distante de la première ; et **en ce qu'**il est prévu dans le répartiteur (212) un agencement de canaux d'arrivée de matériau de prise d'empreinte (250, 251, 252) qui relie un élément de raccordement du matériau de prise d'empreinte (240) porté par le répartiteur (212) aux orifices d'arrivée de matériau de prise d'empreinte (232) et/ou il est prévu dans le répartiteur (212) un agencement de canaux d'arrivée de vide (248) par l'intermédiaire duquel au moins un élément de raccordement de vide (242, 244) porté par le répartiteur (212) est relié avec au moins un orifice d'arrivée de vide (234, 236).

2. Porte-empreinte selon la revendication 1, **caractérisé en ce qu'**il est prévu au moins un orifice d'arrivée de vide (236) dans la partie d'extrémité antérieure du fond de porte-empreinte (210).

3. Porte-empreinte selon la revendication 1 ou 2, **caractérisé en ce qu'**au moins un orifice d'arrivée de matériau de prise d'empreinte (232) est disposée dans une partie d'extrémité distale du fond de porte-empreinte (210).

4. Porte-empreinte selon l'une des revendications 1 à 3, **caractérisé en ce que** les parties des agencements de canaux du répartiteur (212) voisines des orifices d'arrivée (232, 234, 236) se présentent sous la forme de rainures (248, 252) ouvertes en direction du fond de porte-empreinte (10).

5. Porte-empreinte selon l'une des revendications 1 à 4, **caractérisé en ce que** le fond de porte-empreinte (210) et le répartiteur (212) présentent des moyens de positionnement (228, 230) qui coopèrent.

6. Porte-empreinte selon la revendication 5, **caractérisé en ce que** les moyens de positionnement présentent des rainures de positionnement (228) et des nervures de positionnement (230) qui s'étendent au voisinage des bords de la paroi externe (214) du fond de porte-empreinte (210).

7. Porte-empreinte selon l'une des revendications 1 à 6, **caractérisé en ce que** le répartiteur (212) est relié de manière détachable au moyen d'une liaison à encliquetage (238) au fond de porte-empreinte (210).

8. Porte-empreinte selon l'une des revendications 1 à 7, **caractérisé en ce que** la surface limitante du répartiteur (212) faisant face au fond de porte-empreinte (210) présente au moins une poche d'aspiration (258) qui est reliée par l'intermédiaire d'un autre agencement de canaux (254, 256) du répartiteur (212) à un élément de raccordement de vide (246) séparé.

9. Porte-empreinte selon l'une des revendications 1 à 8, **caractérisé en ce qu'**au moins une partie (226) du fond de porte-empreinte (210) est fabriquée en un matériau transparent.

10. Porte-empreinte selon l'une des revendications 1 à 9, **caractérisé en ce que** les orifices d'arrivée (232, 234, 236) et les agencements de canaux (248 ; 250, 251, 252 ; 254, 256) sont symétriques par rapport à un plan médian longitudinal du porte-empreintes.

11. Porte-empreinte selon la revendication 10, **caractérisé en ce qu'**il est prévu dans la partie d'extrémité antérieure du répartiteur (212) deux éléments de raccordement de vide (242, 244) qui sont reliés par l'intermédiaire d'une partie de l'agencement de canaux d'arrivée de vide (248) à un orifice d'arrivée de vide central (236) et de préférence à deux orifices d'arrivée de vide latéraux situés à peu près au niveau de la position des canines dans le fond de porte-empreinte (210).

12. Porte-empreinte selon Tune des revendications 1 à 11, **caractérisé en ce que** la surface externe (260) du répartiteur (212) est bombée.

13. Porte-empreinte selon l'une des revendications 1 à 12, **caractérisé en ce que** le fond de porte-empreinte (210) et/ou le répartiteur (212) est une pièce moulée en matière plastique.

14. Porte-empreinte selon l'une des revendications 1 à 13, **caractérisé en ce que** le fond de porte-empreinte et/ou le répartiteur (212) est une pièce moulée en métal.

15. Porte-empreinte selon Tune des revendications 1 à 14, **caractérisé en ce que** les différentes éléments de raccordement (240, 242, 244, 246) sont disposés très près les uns des autres dans la partie d'extrémité antérieure du répartiteur (212).

16. Porte-empreinte selon l'une des revendications 1 à 15, **caractérisé en ce que** l'agencement de canaux d'arrivée de vide (248), vu dans le sens d'écoulement, présente avant au moins un orifice d'arrivée de vide (236) au moins un blocage de matériau de prise d'empreinte (249).

17. Porte-empreinte selon la revendication 16, **caractérisé en ce que** les blocages de matériau de prise d'empreinte (249) sont formés respectivement par une partie surélevée du fond d'une rainure de répartition (248) qui fait partie de l'agencement de canaux d'arrivée de vide.

18. Dispositif selon l'une des revendications 1 à 17, **caractérisé en ce que** le réceptacle (210, 212) du porte-empreinte présente un premier orifice d'arrivée (232) relié à une première extrémité de la cavité de formage et un deuxième orifice d'arrivée (234) relié à une deuxième extrémité de la cavité de formage.

19. Dispositif pour réaliser des empreintes dentaires avec un porte-empreinte selon l'une des revendications 1 à 18, **caractérisé par** une forme inférieure (310) sur laquelle un objet (324) dont on veut prendre l'empreinte peut être fixé (320, 322) et qui présente une paroi étanche (314) de préférence déformable entourant l'objet (324) dont on veut prendre l'empreinte et qui ensemble avec le réceptacle (328) délimite une cavité de formage étanche (326).

20. Dispositif selon la revendication 19, **caractérisé en ce que** la paroi étanche (314) présente une membrane étanche fixée sur un logement (312) de la forme inférieure (310).

21. Dispositif selon la revendication 20, **caractérisé en ce que** la membrane étanche (314) délimite ensemble avec le logement (312) un espace arrière de membrane (358) qui est rempli d'un fluide (372).

22. Dispositif selon la revendication 21, **caractérisé en ce que** le fluide est un gaz sous pression négative qui précontraint la membrane étanche (314) sous une forme concave.

23. Dispositif selon la revendication 22, **caractérisé en ce que** le fluide est un liquide ou un gel.

24. Dispositif selon Tune des revendications 21 à 23, **caractérisé par** un régulateur de pression (368) relié à l'espace arrière de membrane (358).

25. Dispositif selon la revendication 19, **caractérisé en ce que** la paroi étanche comprend un matériau déformable élastiquement (374).

26. Dispositif selon la revendication 25, **caractérisé en ce que** la surface frontale libre du matériau expansé présente une peau superficielle étanche (376) ou porte un film étanche au fluide.

27. Dispositif selon l'une des revendications 19 à 26, **caractérisé en ce que** le réceptacle (328) présente une paroi périphérique externe (332 - 336) réglable en hauteur.

28. Dispositif selon la revendication 27, **caractérisé en ce que** la paroi périphérique présente une partie de paroi fixe (332) et une partie de paroi (336) mobile dans le sens de la hauteur dans une rainure (334) de ladite paroi fixe ainsi que des moyens (340) pour définir l'écartement entre la partie de paroi mobile (336) et la partie de paroi fixe (332).

29. Dispositif selon la revendication 28, **caractérisé en ce que** la partie de paroi mobile (336) est précontrainte par un agencement à ressort (342) dans une position d'extension.

30. Dispositif selon la revendication 28 ou la revendication 29, **caractérisé en ce que** la partie de paroi mobile (336) est rendue étanche par rapport à la rainure (334) de la partie de paroi fixe (332) au moyen d'un agencement de joint d'étanchéité (338).

31. Dispositif selon l'une des revendications 19 à 30, **caractérisé en ce que** le réceptacle (328) est un élément jetable fabriqué d'une seule pièce en matière plastique, en particulier une pièce emboutie.

32. Dispositif selon l'une des revendications 19 à 31, **caractérisé en ce qu'**au moins un orifice d'arrivée (346) du réceptacle (328) pouvant être relié à une source de vide est agencé dans une partie de paroi (330) supérieure, dans les conditions d'utilisation, du réceptacle (328).

33. Dispositif selon l'une des revendications 19 à 32, **caractérisé en ce qu'**au moins l'un des orifices d'arrivée (348, 350) est prévue dans une paroi (352) arrière, dans les conditions d'utilisation, du réceptacle (328).

34. Dispositif selon l'une des revendications 19 à 33, **caractérisé en ce que** le réceptacle (1) présente un logement rigide en forme de godet (330, 332) et, fixée sur celui-ci, une membrane de cavité de formage (314) déformable élastiquement.

35. Dispositif selon la revendication 34, **caractérisé par** des moyens (390, 89) pour profiler la membrane de cavité de formage (314).

36. Dispositif selon la revendication 35, **caractérisé en ce que** les moyens de profilage présentent un élément d'appui profilé (390) et des moyens (89) pour précontraindre la membrane de cavité de formage (314) contre l'élément d'appui (390).

37. Dispositif selon la revendication 36,
**caractérisé en ce que** l'élément d'appui (390 ; 392) a une forme en treillis ou à pores ouverts et **en ce que** les moyens de précontrainte présentent une source de pression négative qui peut être reliée à l'espace de travail (386) délimité par la membrane de cavité de formage (314) et le logement du réceptacle.

38. Dispositif selon la revendication 36 ou la revendication 37, **caractérisé en ce que** les moyens de précontrainte présentent une source de pression qui peut être reliée à la cavité de formage (326) située avant la membrane de cavité de formage (314).

39. Dispositif selon Tune des revendications 20 à 38, **caractérisé en ce que** le réceptacle (328) présente une membrane de cavité de formage (314) qui s'étend au-dessus du modèle (324) et **en ce qu'**il est prévu des moyens (392, 394-400) pour appliquer des charges différentes dans des zones différentes de la membrane de cavité de formage (314), la membrane de cavité de formage (314) étant de préférence fixée sur la partie inférieure d'un logement (312) de la forme inférieure (310).

40. Dispositif selon la revendication 39, **caractérisé en ce que** les moyens de charge présentent des poids (394-400) adaptés à différentes zones du modèle (324).

41. Dispositif selon la revendication 40, **caractérisé en ce qu'**il présente au moins un capteur de déplacement (402-408) coopérant avec un des poids (394-400).

42. Dispositif selon Tune des revendications 19 à 41 ou porte-empreinte selon l'une des revendications 1 à 18, **caractérisé par** au moins un élément d'espace mort (422) placé dans le réceptacle, qui est choisi parmi une pluralité d'éléments d'espace mort standards ou qui est déformable plastiquement.
